(19)

Europäisches
Patentamt
European
Patent Office
Office européen
des brevets

(11) **EP 1 829 898 A1**

(12) **EUROPEAN PATENT APPLICATION**
published in accordance with Art. 158(3) EPC

(43) Date of publication:
**05.09.2007 Bulletin 2007/36**

(51) Int Cl.:
***C08F 4/658*** *(2006.01)*   ***C08F 10/00*** *(2006.01)*

(21) Application number: **05814411.4**

(22) Date of filing: **02.12.2005**

(86) International application number:
**PCT/JP2005/022596**

(87) International publication number:
**WO 2006/064718 (22.06.2006 Gazette 2006/25)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **13.12.2004 JP 2004359720
18.01.2005 JP 2005010178
08.08.2005 JP 2005229423**

(71) Applicant: **Toho Catalyst Co., Ltd.
Kurobe-shi, Toyama 938-0042 (JP)**

(72) Inventors:
• **HOSAKA, Motoki
TOHO CATALYST CO., LTD.
Chigasaki-shi,
Kanagawa 253-8510 (JP)**
• **SATO, Maki
TOHO CATALYST CO., LTD.
Chigasaki-shi,
Kanagawa 253-8510 (JP)**

(74) Representative: **Fiesser, Gerold Michael et al
KNH Patentanwälte,
Kahlhöfer, Neumann, Herzog, Fiesser,
Isartorplatz 8
80331 München (DE)**

(54) **SOLID CATALYST COMPONENT AND CATALYST FOR POLYMERIZATION OF OLEFIN, AND
METHOD FOR PRODUCING POLYMER OR COPOLYMER OF OLEFIN USING THE SAME**

(57)    A catalyst for polymerization of olefins and a process for producing an olefin polymer or copolymer are disclosed. The catalyst comprises (a) a solid catalyst component obtained by causing an organosilicon compound (b) represented by the formula, $[CH_2=CH-(CH_2)_n]_qSiR^3_{4-q}$, and an organoaluminum compound to come in contact with a solid component comprising magnesium, titanium, halogen, and an electron donor compound, or a solid catalyst component obtained by causing a magnesium compound, two types of titanium compounds, an electron donor compound, and an organosilicon compound to come in contact with each other, and (B) an organoaluminum compound. The process for producing an olefin polymer or copolymer comprises polymerizing olefins in the presence of the catalyst. The catalyst has a high catalytic activity, exhibits excellent hydrogen response, and can produce polymers with high stereoregularity and a broad molecular weight distribution at a high yield.

Fig.1

(A)Transition metal component
  (a)Magnesium compound
  Titanium compound
  Electron donor compound

(b)Organosilicon compound
  $R^1_pSi(OR^2)_{4-p}$

(c)Organosilicon compound
  $[CH_2=CH-(CH_2)_n]_qSiR^3_{4-q}$

(d)Organoaluminium compound
  $R^4_rAlQ_{3-r}$

(B)Organoaluminium compound
$R^4_rAlQ_{3-r}$
$0<r\leqq 3$

contact

Olefin

**EP 1 829 898 A1**

**Description**

TECHNICAL FIELD

The present invention relates to a solid catalyst component and a catalyst for polymerization of olefins capable of maintaining high stereoregularity and yield of the polymer and capable of producing olefin polymers having a high melt flow rate with a given amount of hydrogen (excellent hydrogen response) and having a broad molecular weight distribution, and to a process for producing olefin polymers or copolymers using the solid catalyst component or the catalyst.

BACKGROUND ART

A solid catalyst component containing magnesium, titanium, an electron-donor compound, and halogen as essential components used for the polymerization of olefins such as propylene has been known. A large number of processs for polymerizing or copolymerizing olefins in the presence of a catalyst for olefin polymerization comprising the above solid catalyst component, an organoaluminum compound, and an organosilicon compound have been proposed. For example, Patent Document 1 (JP-A-57-63310) and Patent Document 2 (JP-A-57-63311) propose a process for polymerizing olefins with three or more carbon atoms, in which a catalyst comprising a magnesium compound, a titanium compound, and an organosilicon compound having an Si-O-C bond is used. However, because these processes are not necessarily satisfactory for producing highly stereoregular polymers in a high yield, improvement of these processes has been desired.

Patent Document 3 (JP-A-63-3010) proposes a catalyst and a process for polymerizing propylene. The catalyst comprises a solid catalyst component prepared by heat treating a powder obtained by contacting dialkoxy magnesium, aromatic dicarboxylic acid diester, aromatic hydrocarbon, and titanium halide; an organoaluminum compound; and an organosilicon compound.

Patent Document 4 (JP-A-3-234707) discloses a Ziegler-type solid catalyst component for alpha-olefin polymerization obtained by contacting (i) a solid component containing titanium, magnesium, and halogen as essential components, (ii) an organosilicon compound having two or more Si-O bonds, (iii) a vinyl silane compound, and (iv) an organometallic compound of a metal in Group I to III of the Periodic Table. The Patent Document 4 proposes a catalyst for propylene polymerization which comprises the solid catalyst component and an organoaluminum compound and a process for polymerizing propylene in the presence of the catalyst.

All of the above-described technologies have attained certain results in improving catalytic activity to the extent of permitting dispensing with an ash-removal step for removing catalyst residues such as chlorine and titanium from formed polymers, improving the yield of stereoregular polymers, and improving durability of catalytic activity during polymerization. However, there is a demand for continued improvement of such a catalyst.

The polymers produced using these catalysts are used in a variety of applications including formed products such as vehicles and household electric appliances, containers, and films. These products are manufactured by melting polymer powders produced by polymerization and forming the melted polymers using various molds. In manufacturing formed products, particularly, large products by injection molding, melted polymers are sometimes required to have a high fluidity (a melt flow rate: MFR). In particular, for the purpose of cost reduction in the manufacture of a highly functional block copolymer to be used as a vehicle material, in a process of producing a copolymer in an amount just required for obtaining an olefin-based thermoplastic elastomer (hereinafter referred to as "TPO") in a copolymerization reactor, and obtaining the TPO directly in the polymerization reactor without adding a separately produced copolymer, that is, in so-called "manufacture of a reactor-made TPO by direct polymerization", a melt flow rate of 200 or more is demanded in a homopolymerization stage in order to produce a finished product with a high melt flow rate and to ensure easy injection molding.

The melt flow rate greatly depends on the molecular weight of the polymers. In the industry, hydrogen is generally added as a molecular weight regulator for polymers during polymerization of propylene. In this instance, a large quantity of hydrogen is usually added to produce low molecular weight polymers having a high melt flow rate. However, the quantity of hydrogen which can be added is limited because pressure resistance of the reactor is limited for the sake of safety. In order to add a larger amount of hydrogen in vapor phase polymerization, the partial pressure of monomers to be polymerized has to be decreased, resulting in a decrease in productivity. The use of a large amount of hydrogen also brings about a problem of cost. Development of a catalyst capable of producing polymers with a high melt flow rate by using a smaller amount of hydrogen, in other words, a catalyst exhibiting a high melt flow rate effect by a given amount of hydrogen, has therefore been desired. Process described below have not been sufficient in fundamentally solving the above-mentioned problem in the production of TPO by direct polymerization.

Patent Document 5 (JP-A-1-6006) discloses a solid catalyst component for olefin polymerization containing a dialkoxymagnesium, titanium tetrachloride, and dibutyl phthalate. The catalyst component was proven to be successful to some extent in producing a stereoregular propylene polymer in a high yield. It was indicated, however, that the polymers produced using this catalyst do not have a sufficiently broad molecular weight distribution for producing a biaxial orientation polypropylene film (BOPP). Patent Document 6 (JP-A-2001-240634) discloses a process of using an organic cyclic aminosilane compound as an electron donor used in polymerization. This process can broaden the molecular weight distribution, but the catalyst exhibits only low activity. Improvement is desired. Patent Document 7(JP-A-2002-542347) discloses a process of broadening the molecular weight distribution while maintaining catalytic activity by using succinic acid diester as a solid catalyst component.

However, this process cannot produce a polymer with sufficient stereoregularity.

Further improvement is desired.

(Patent Document 1) JP-A-57-63310 (Claims)
(Patent Document 2) JP-A-57-63311 (Claims)
(Patent Document 3) JP-A-63-3010 (Claims)
(Patent Document 4) JP-A-3-234707 (Claims)
(Patent Document 5) JP-A-1-6006 (Claims)
(Patent Document 6) JP-A-2001-240634 (Claims)
(Patent Document 7) JP-A -2002-542347 (Claims and paragraph 0024)

Therefore, an object of the present invention is to provide a solid catalyst component and a catalyst for polymerization of olefins capable of maintaining high stereoregularity and yield of the polymer and capable of producing olefin polymers having a high melt flow rate with a given amount of hydrogen (excellent hydrogen response) and having a broad molecular weight distribution, and a process for producing an olefin polymer using the solid catalyst component or the catalyst.

DISCLOSURE OF THE INVENTION

In view of this situation, the inventors have conducted extensive studies. As a result, the inventors have found that a catalyst formed from a solid catalyst component for olefin polymerization obtained by contacting a solid component containing magnesium, titanium, halogen, and an electron donor compound, two types of organosilicon compounds, each having a specific structure, and an organoaluminum compound having a specific structure, and an organoaluminum compound is suitable as a catalyst for polymerizing or copolymerizing olefins as compared with general catalysts. This finding has led to the completion of the present invention.

Specifically, the present invention provides a solid catalyst component for polymerization of olefins obtained by contacting (a) a solid component containing magnesium, titanium, halogen, and an electron donor compound, (b) an organosilicon compound represented by the following formula (1), (c) an organosilicon compound represented by the following formula (2), and (d) an organoaluminum compound represented by the following formula (3).

$$(R^1R^2N)_s(R^3)_{4-s-t}Si(OR^4)_t \qquad (1)$$

wherein $R^1$ individually represents a linear or branched alkyl group having 1 to 12 carbon atoms, a cycloalkyl group, an aryl group, a vinyl group, an allyl group, or an aralkyl group, $R^2$ individually represents a hydrogen atom, a linear or branched alkyl group having 1 to 12 carbon atoms, a cycloalkyl group, an aryl group, a vinyl group, an allyl group, or an aralkyl group, $R^1$ and $R^2$ being either the same or different, or $R^1$ and $R^2$ bonding together to form a cyclic divalent group, $R^3$ individually represents a linear or branched alkyl group having 1 to 20 carbon atoms, a cycloalkyl group, an aryl group, a vinyl group, an allyl group, or an aralkyl group, $R^4$ individually represents an alkyl group having 1 to 4 carbon atoms, a cycloalkyl group, an aryl group, a vinyl group, an allyl group, or an aralkyl group, s is an integer of 0 or satisfying $1 \le s \le 3$, and t indicates an integer from 1 to 3, provided that $s+t \le 4$, and provided further that when t is 3, s is 0, and when s = 0, $R^3$ may be a hydrogen atom.

$$[CH_2=CH-(CH_2)_n]_qSiR^5_{4-q} \qquad (2)$$

wherein $R^5$ individually represents a hydrogen atom, an alkyl group having 1 to 20 carbon atoms, a cycloalkyl group, a phenyl group, a vinyl group, or a halogen atom, n is 0 or an integer of 1 to 5, and q is an integer of 1 to 4, provided that when q is 1, at least one of $R^5$s is an alkyl group having 2 to 20 carbon atoms, a cycloalkyl group, an aryl group, a vinyl group, or a halogen atom,

$$R^6_rAlQ_{3-r} \qquad (3)$$

wherein $R^6$ represents an alkyl group having 1 to 4 carbon atoms, Q represents a hydrogen atom or a halogen atom, and r represents a real number satisfying the formula $0 < p \leq 3$.

The present invention further provides a catalyst for polymerization of olefins formed from (A) the above solid catalyst component and (B) an organoaluminum compound represented by the following formula (3),

$$R^6{}_r AlQ_{3-r} \qquad (3)$$

wherein $R^6$ represents an alkyl group having 1 to 4 carbon atoms, Q represents a hydrogen atom or a halogen atom, and r represents a real number satisfying the formula $0 < p \leq 3$.

The present invention further provides a process for producing an olefin polymer or copolymer comprising polymerizing olefins in the presence of the above catalyst for polymerization of olefins.

The catalyst using the solid catalyst component for polymerization of olefins of the present invention can highly maintain the stereoregularity and the yield of the polymers and can obtain a greater melt flow rate effect per a given amount of hydrogen (this effect is hereinafter referred to from time to time simply as "hydrogen response") as compared with general catalysts. Therefore, owing to the capability of reducing the amount of hydrogen used for the polymerization and high catalytic activity, the catalyst is expected not only to produce polyolefins for common use at a low cost, but also to be useful in the manufacture of olefin polymers having high functions. Furthermore, by causing an organosilicon compound (an external electron donor compound) to be included in the solid catalyst component, it is possible to significantly reduce the amount of an organosilicon compound used as an external electron donor compound, which has conventionally been caused to come in contact with a solid catalyst component immediately before the polymerization of olefins. The production cost of the resulting polymer can thus be reduced. Moreover, olefin polymers with a broad molecular weight distribution can be expected to produce polymers with a high added value suitable for production of a biaxial-orientation polypropylene film (BOPP) and the like.

BRIEF DESCRIPTION OF THE DRAWINGS

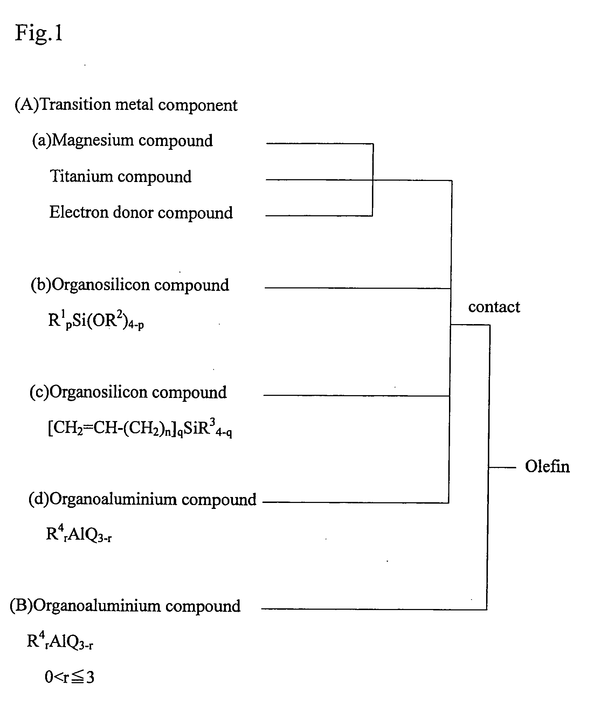

Figure 1 is a flowchart showing a process for preparing the solid catalyst component and polymerization catalyst of the present invention.

BEST MODE FOR CARRYING OUT THE INVENTION

The solid catalyst component (A) (hereinafter referred to from time to time as "component (A)") of the present invention can be obtained by causing a solid component (a) containing magnesium, titanium, halogen, and an electron donor compound (hereinafter referred to from time to time as "component (a)") to come in contact with an organosilicon compound (b) represented by the above formula (1) (hereinafter referred to from time to time as "component (b)"), an organosilicon compound (c) represented by the above formula (2) (hereinafter referred to from time to time as "component (c)"), and an organoaluminum compound (d) represented by the above formula (3) (hereinafter referred to from time to time as "component (d)").

The solid component (a) can be obtained by contacting a magnesium compound (i) (hereinafter referred to from time to time as "component (i)"), a titanium compound (ii) (hereinafter referred to from time to time as "component (ii)"), and an electron donor compound (iii) (hereinafter referred to from time to time as "component (iii)"). In preparing the solid component (a), an aromatic hydrocarbon compound (iv) (hereinafter referred to from time to time as "component (iv)") is also caused to come in contact with the component (i), the component (ii), and the component (iii).

As the magnesium compound (i) used for preparing the solid component, magnesium dihalide, dialkyl magnesium, alkylmagnesium halide, dialkoxy magnesium, diaryloxy magnesium, alkoxy magnesium halide, fatty acid magnesium, and the like can be given. Of these magnesium compounds, magnesium dihalide, a mixture of magnesium dihalide and dialkoxy magnesium, and dialkoxy magnesium, particularly dialkoxy magnesium, are preferable. As specific examples, dimethoxy magnesium, diethoxy magnesium, dipropoxy magnesium, dibutoxy magnesium, ethoxymethoxy magnesium, ethoxypropoxy magnesium, and butoxyethoxy magnesium can be given. Of these, diethoxy magnesium is particularly preferable.

These dialkoxymagnesium compounds may be prepared by reacting metallic magnesium with an alcohol in the presence of a halogen, a halogen-containing metal compound, or the like. The above dialkoxymagnesium compounds may be used either individually or in combination of two or more.

The dialkoxymagnesium may be in the form of either granules or powder and either amorphous or spherical in the configuration. For example, when spherical dialkoxymagnesium is used, the resulting polymer is in the form of a polymer powder having a more excellent particle form and a narrower particle size distribution. This improves operability of the polymer powder produced during polymerization operation and eliminates problems such as clogging caused by fine particles contained in the polymer powder.

The spherical dialkoxymagnesium need not necessarily be completely spherical, but may be oval or potato-shaped. Specifically, the particles may have a ratio (1/w) of the major axis diameter (1) to the minor axis diameter (w) of 3 or less, preferably 1 to 2, and more preferably 1 to 1.5.

Dialkoxymagnesium with an average particle size from 1 to 200 $\mu$m can be used. A more preferable average particle size is 5 to 150 $\mu$m. In the case of spherical dialkoxymagnesium, the average particle size is usually 1 to 100 $\mu$m, preferably 5 to 50 $\mu$m, and more preferably 10 to 40 $\mu$m. A powder having a narrow particle size distribution with a small fine and coarse powder content is preferably used. Specifically, the content of particles with a diameter of 5 $\mu$m or less should be 20% or less, and preferably 10% or less. On the other hand, the content of particles with a diameter of 100 $\mu$m or more should be 10% or less, and preferably 5% or less. Moreover, the particle size distribution represented by In(D90/D10), wherein D90 is a particle size at 90% of the integrated particle size, and D 10 is a particle size at 10% of the integrated particle size, is 3 or less, and preferably 2 or less.

Processes of producing such spherical dialkoxymagnesium are described in, for example, JP-A 58-41832, JP-A 62-51633, JP-A 3-74341, JP-A 4-368391, and JP-A 8-73388.

The titanium compound (ii) used for preparing of a solid component (a) is one or more compounds selected from the group consisting of tetravalent titanium halides represented by the formula $Ti(OR^7)_nX_{4-n}$, wherein $R^7$ is an alkyl group having 1 to 4 carbon atoms, X is a halogen atom, and n is an integer of 0 to 4, and alkoxy titanium halides.

Specific examples include, as titanium halides, titanium tetrahalides such as titanium tetrachloride, titanium tetrabromide, and titanium tetraiodide and, as alkoxytitanium halides, methoxytitanium trichloride, ethoxytitanium trichloride, propoxytitanium trichloride, n-butoxytitanium trichloride, dimethoxytitanium dichloride, diethoxytitanium dichloride, dipropoxytitanium dichloride, di-n-butoxytitanium dichloride, trimethoxytitanium chloride, triethoxytitanium chloride, tripropoxytitanium chloride, and tri-n-butoxytitanium chloride. Among these, titanium tetrahalides are preferable and a particularly preferable titanium tetrahalide is titanium tetrachloride. These titanium compounds may be used either individually or in combination of two or more.

The electron donor compound (iii) used for preparing the solid component (a) is an organic compound containing an oxygen atom or nitrogen atom. Alcohols, phenols, ethers, esters, ketones, acid halides, aldehydes, amines, amides, nitriles, isocyanates, and organosilicon compounds containing an Si-O-C bond can be given as examples.

As specific examples, alcohols such as methanol, ethanol, n-propanol, and 2-ethylhexanol; phenols such as phenol and cresol; ethers such as methyl ether, ethyl ether, propyl ether, butyl ether, amyl ether, diphenyl ether, 9,9-bis(methoxymethyl)fluorene, and 2-isopropyl-2-isopentyl-1,3-dimethoxypropane; monocarboxylic acid esters such as methyl formate, ethyl acetate, vinyl acetate, propyl acetate, octyl acetate, cyclohexyl acetate, ethyl propionate, ethyl butylate, ethyl benzoate, propyl benzoate, butyl benzoate, octyl benzoate, cyclohexyl benzoate, phenyl benzoate, methyl p-toluate, ethyl p-toluate, methyl anisate, and ethyl anisate; dicarboxylic acid esters such as diethyl malonate, dipropyl malonate, dibutyl malonate, diisobutyl malonate, dipentyl malonate, dineopentyl malonate, diethyl isopropylbromomalonate, diethyl butylbromomalonate, diethyl isobutylbromomalonate, diethyl diisopropylmalonate, diethyl dibutylmalonate, diethyl diisobutylmalonate, diethyl diisopentylmalonate, diethyl isopropylisobutylmalonate, dimethyl isopropylisopentylmalonate, diethyl bis(3-chloro-n-propyl)malonate, diethyl bis(3-bromo-n-propyl)malonate, diethyl maleate, dibutyl maleate, dimethyl adipate, diethyl adipate, dipropyl adipate, dibutyl adipate, diisodecyl adipate, dioctyl adipate, phthalic acid diesters, and phthalic acid diester derivatives; ketones such as acetone, methyl ethyl ketone, butyl methyl ketone, acetophenone, and benzophenone; acid halides such as phthalic acid dichloride and terephthalic acid dichloride; aldehydes such as acetaldehyde, propionaldehyde, octylaldehyde, and benzaldehyde; amines such as methylamine, ethylamine, tributylamine, piperidine, aniline, and pyridine; amides such as oleic amide and stearic amide; nitriles such as acetonitrile, benzonitrile, and tolunitrile; isocyanates such as methyl isocyanate and ethyl isocyanate; and organosilicon compounds containing an Si-O-C bond such as phenylalkoxysilane, alkylalkoxysilane, phenylalkylalkoxysilane, cycloalkylalkoxysilane, and cycloalkylalkylalkoxysilane can be given.

Specifically, organosilicon compounds having a Si-N-C bond such as bis(alkylamino)dialkoxysilane, bis(cycloalkylamino)dialkoxysilane, alkyl(alkylamino)dialkoxysilane, dialkylaminotrialkoxysilane, and cycloalkylaminotrialkoxysilane can be given.

Among the above electron donor compounds, the esters, particularly aromatic dicarboxylic acid diesters, are preferably used. Phthalic acid diesters and phthalic acid diester derivatives are ideal compounds. Specific examples of the phthalic acid diester include the following compounds: dimethyl phthalate, diethyl phthalate, di-n-propyl phthalate, diisopropyl phthalate, di-n-butyl phthalate, diisobutyl phthalate, ethylmethyl phthalate, methyl(isopropyl) phthalate, ethyl (n-propyl) phthalate, ethyl(n-butyl) phthalate, ethyl(isobutyl) phthalate, di-n-pentyl phthalate, diisopentyl phthalate, dineopentyl phthalate, dihexyl phthalate, di-n-heptyl phthalate, di-n-octyl phthalate, bis(2,2-dimethylhexyl) phthalate, bis(2-ethylhexyl) phthalate, di-n-nonyl phthalate, diisodecyl phthalate, bis(2,2-dimethylheptyl) phthalate, n-butyl(isohexyl) phthalate, n-butyl(2-ethylhexyl) phthalate, n-pentylhexyl phthalate, n-pentyl(isohexyl) phthalate, isopentyl(heptyl) phthalate, n-pentyl(2-ethylhexyl) phthalate, n-pentyl(isononyl) phthalate, isopentyl(n-decyl) phthalate, n-pentylundecyl phthalate, isopentyl(isohexyl) phthalate, n-hexyl(2,2-dimethylhexyl) phthalate, n-hexyl(isononyl) phthalate, n-hexyl(n-decyl) phthalate, n-heptyl(2-ethylhexyl) phthalate, n-heptyl(isononyl) phthalate, n-heptyl(neodecyl) phthalate, and 2-ethylhexyl (isononyl) phthalate. One or more of these phthalic acid diesters can be used.

As examples of the phthalic acid diester derivatives, compounds in which one or two hydrogen atoms on the benzene ring to which the two ester groups of the phthalic diesters bond are substituted with an alkyl group having 1 to 5 carbon atoms or a halogen atom such as a chlorine atom, a bromine atom, and a fluorine atom can be given. The solid catalyst component prepared by using the phthalic acid diester derivatives as an electron donor compound can particularly contribute to a melt flow rate increase with a given amount of hydrogen by increasing hydrogen response, that is, can increase the melt flow rate of polymer by using the same or a smaller amount of hydrogen during the polymerization.

As specific examples, dineopentyl 4-methylphthalate, dineopentyl 4-ethylphthalate, dineopentyl 4,5-dimethylphthalate, dineopentyl 4,5-diethylphthalate, diethyl 4-chlorophthalate, di-n-butyl 4-chlorophthalate, dineopentyl 4-chlorophthalate, diisobutyl 4-chlorophthalate, diisohexyl 4-chlorophthalate, diisooctyl 4-chlorophthalate, diethyl 4-bromophthalate, di-n-butyl 4-bromophthalate, dineopentyl 4-bromophthalate, diisobutyl 4-bromophthalate, diisohexyl 4-bromophthalate, diisooctyl 4-bromophthalate, diethyl 4,5-dichlorophthalate, di-n-butyl 4,5-dichlorophthalate, diisohexyl 4,5-dichlorophthalate, and diisooctyl 4,5-dichlorophthalate can be given. Among these, dineopentyl 4-bromophthalate, di-n-butyl 4-bromophthalate, and diisobutyl 4-bromophthalate are preferable.

A combined use of two or more of the above-mentioned esters is also preferable. In this instance, the total carbon atom numbers of alkyl groups of the ester used is preferably four or more greater than the total carbon atom numbers of alkyl groups of the other ester.

The solid component (a) of the present invention can be preferably prepared by causing the above components (i), (ii), and (iii) to come in contact with each other in the presence of an aromatic hydrocarbon compound (iv). Aromatic hydrocarbon compounds having a boiling point of 50°C to 150°C such as toluene, xylene, and ethylbenzene are preferably used as the component (iv). The aromatic hydrocarbon compounds may be used either individually or in combination of two or more.

As a particularly preferable process for preparing the solid component (a), a process of forming a suspension from the component (i), component (iii), and an aromatic hydrocarbon compound (iv) having a boiling point of 50 to 150°C, causing the suspension to come in contact with a mixed solution prepared from the component (ii) and the component (iv), and reacting the mixture can be given.

In addition to the above-mentioned components, it is preferable to use a polysiloxane (v) (hereinafter referred to from time to time simply as "component (v)"). Not only stereoregularity or crystallinity of the resulting polymer can be increased, but also production of fine powder of the polymer can be reduced by using the polysiloxane. Polysiloxanes are polymers having a siloxane bond (-Si-O bond) in the main chain and are generally referred to as silicone oil. The polysiloxanes used in the present invention are chain-structured, partially hydrogenated, cyclic, or modified polysiloxanes which are liquid or viscous at normal temperatures with a viscosity at 25°C in the range of 0.02 to 100 cm$^2$/s (2 to 10,000 cSt).

As examples of the chain-structured polysiloxanes, dimethylpolysiloxane and methylphenylpolysiloxane can be given; as examples of the partially hydrogenated polysiloxanes, methyl hydrogen polysiloxanes with a hydrogenation degree of 10 to 80% can be given; as examples of the cyclic polysiloxanes, hexamethylcyclotrisiloxane, octamethylcyclotetrasiloxane, decamethylcyclopentasiloxane, 2,4,6-trimethylcyclotrisiloxane, and 2,4,6,8-tetramethylcyclotetrasiloxane can be given; as examples of the modified polysiloxane, higher fatty acid group-substituted dimethylsiloxane, epoxy group-substituted dimethylsiloxane, and polyoxyalkylene group-substituted dimethylsiloxane can be given. Of these, decamethylcyclopentasiloxane and dimethylpolysiloxane are preferable, with decamethylcyclopentasiloxane being particularly preferable.

The solid component (a) can be prepared by causing the above components (i), (ii), and (iii), and, as required, the component (iv) or component (v) to come in contact with each other. The process of preparing this solid component (a) will now be described in detail. One specific example of the process for preparing the solid component comprises suspending the magnesium compound (i) in the tetravalent titanium halide (ii) or the aromatic hydrocarbon compound (iv), and causing the electron donor compound (iii) such as a phthalic acid diester and, as required, the tetravalent titanium halide (ii) to come in contact with the suspension.

In this process, a spherical solid catalyst component (a) with a sharp particle size distribution can be obtained by using a spherical magnesium compound. Such a spherical solid component (a) with a sharp particle size distribution can also be obtained without using a spherical magnesium compound if particles are formed by a spray dry process in which a solution or suspension is sprayed and dried using a sprayer, for example.

These components are caused to come in contact with each other in a vessel equipped with a stirrer in an inert gas atmosphere from which water and the like have been removed while stirring. The contact temperature, which is a temperature when these components are caused to come into contact with each other, may be either the same as or different from the reaction temperature. When the components are caused to come into contact with each other by

6

stirring for preparing the mixture or are dispersed or suspended for a denaturing treatment, the components may be stirred at a comparatively low temperature of around room temperature. A temperature in a range from 40 to 130°C is preferable for obtaining the product by reaction after contact. The reaction does not sufficiently proceed at a reaction temperature below 40°C, resulting in a solid component with inadequate properties. On the other hand, control of the reaction becomes difficult at a temperature above 130°C due to vaporization of the solvent and the like. The reaction time is one minute or more, preferably 10 minutes or more, and still more preferably 30 minutes or more.

As preferable processes for preparing the solid component(a) of the present invention, a process comprising suspending the component (i) in the component (iv), causing the resulting suspension to come in contact with the component (ii), then the component (iii) and component (iv), and causing these components to react and a process comprising suspending the component (i) in the component (iv), causing the resulting suspension to come in contact with the component (iii), then the component (ii), and causing these components to react can be given. The solid product thus prepared may be caused to contact with the component (ii) or the components (ii) and (iii) once more or two or more times to improve the performance of the ultimate solid catalyst component. This contacting step is preferably carried out in the presence of the aromatic hydrocarbons (iv).

As a preferable process for preparing the solid component(a) of the present invention, a process of preparing a suspension of the component (i), component (iii), and an aromatic hydrocarbon compound (iv) having a boiling point of 50 to 150°C, causing this suspension to contact with a mixed solution made from the component (ii) and the component (iv), and reacting the mixture.

As a preferable example of the process for preparing the solid component(a), the following processes can be given. A suspension is prepared from the above component (i), component (iii), and an aromatic hydrocarbon compound (iv) having a boiling point of 50 to 150°C. A mixed solution is prepared from the above component (ii) and the aromatic hydrocarbon compound (iv) having a boiling point of 50 to 150°C. The above-described suspension is added to this solution. The resulting mixture is heated and reacted (a first reaction). After the reaction, the solid product is washed with a hydrocarbon compound which is liquid at normal temperatures to obtain a solid product. An additional component (ii) and the aromatic hydrocarbon compound (iv) having a boiling point of 50 to 150°C are caused to come in contact with the washed solid product at a temperature of -20°C to 100°C, then the temperature is raised to react the mixture (a second reaction). After the reaction, the reaction mixture is washed with a hydrocarbon compound which is liquid at normal temperatures 1 to 10 times to obtain a solid component(a) .

As a particularly preferable process for preparing the solid component (a) of the present invention, a process of preparing a suspension from the component (i) and the component (iv), adding a mixed solution prepared from the component (ii) and the component (iv) to the suspension, adding the component (iii) to the resulting mixed solution, and heating the mixture to carry out a reaction (1) can be given. The solid product obtained by the reaction (1) is washed with an aromatic hydrocarbon compound used as the component (iv), caused to come in contact with a mixed solution made from the component (ii) and the component (iv), and heated to carry out a reaction (2) to obtain the solid component (a).

Based on the above description, a particularly preferable process for preparing the solid component (a) comprises suspending the dialkoxymagnesium (i) in the aromatic hydrocarbon compound (iv) having a boiling point in the range of 50 to 150°C, causing a mixture of the tetravalent titanium halide (ii) and the aromatic hydrocarbon compound (iv) having a boiling point in the range of 50 to 150°C to come in contact with the suspension, and reacting the mixture. In this instance, either before or after the mixture of the tetravalent titanium halide compound (ii) and the aromatic hydrocarbon compound (iv) having a boiling point in the range of 50 to 150°C are caused to come in contact with the suspension, one or more electron donor compounds (iii) such as a phthalic acid diester are caused to come in contact with the suspension at a temperature from -20°C to 130°C to carry out the first reaction to obtain a solid product (1). In this instance, it is desirable to carry out an aging reaction at a low temperature either before or after the above one or more electron donor compounds are caused to come in contact with the suspension. After washing the solid product (1) with a hydrocarbon compound which is liquid at normal temperatures, preferably with the aromatic hydrocarbon compound (iv) having a boiling point in the range of 50 to 150°C (intermediate washing), the tetravalent titanium halide (ii) is again caused to come in contact with and reacted with the solid product (1) in the presence of the aromatic hydrocarbon compound at a temperature of -20°C to 100°C to obtain a solid product (2). As required, the intermediate washing and the reaction (2) may be repeated several times. Subsequently, the solid product (2) is washed with a liquid hydrocarbon compound by decantation at an ordinary temperature to obtain the solid component (a).

The ratio of the components used for the preparation of the solid component (a) cannot be generically defined, because such a ratio varies according to the process of preparation employed. For example, the tetravalent titanium halide (ii) is used in an amount of 0.5 to 100 mol, preferably 0.5 to 50 mol, still more preferably 1 to 10 mol; the electron donor compound (iii) is used in an amount of 0.01 to 10 mol, preferably 0.01 to 1 mol, and still more preferably 0.02 to 0.6 mol; the aromatic hydrocarbon compound (iv) is used in an amount of 0.001 to 500 mol, preferably 0.001 to 100 mol, and still more preferably 0.005 to 10 mol; and the polysiloxane (v) is used in an amount of 0.01 to 100 g, preferably 0.05 to 80 g, and still more preferably 1 to 50 g, for one mol of the magnesium compound (i) .

Although there are no specific limitations to the amounts of titanium, magnesium, halogen atoms, and electron donors in the solid component (a), the content of titanium is 1.0 to 8.0 wt%, preferably 2.0 to 8.0 wt%, and still more preferably 3.0 to 8.0 wt%; the content of magnesium is 10 to 70 wt%, preferably 10 to 50 wt%, more preferably 15 to 40 wt%, and particularly preferably 15 to 25 wt%; the content of halogen atoms is 20 to 90 wt%, preferably 30 to 85 wt%, more preferably 40 to 80 wt%, and particularly preferably 45 to 75 wt%; and the total amount of electron donor compounds is 0.5 to 30 wt%, preferably 1 to 25 wt%, and particularly preferably 2 to 20 wt%.

As the organosilicon compound (b) represented by the above formula (1) which constitutes the solid catalyst component for olefin polymerization of the present invention, a compound represented by the following formula (4) (hereinafter referred to from time to time as "component (b1)") and a compound represented by the following formula (5) (hereinafter referred to from time to time as "component (b2)") can be given.

$$(R^3)_{4-t}Si(OR^4)_t \qquad (4)$$

wherein $R^3$, $R^4$, and t are the same as defined above, provided that $R^3$ may be a hydrogen atom.

$$(R^1R^2N)_s(R^3)_{4-s-t}Si(OR^4)_t \qquad (5)$$

wherein $R^1$, $R^2$, $R^3$, and $R^4$ are the same as defined above, s is an integer of 1 to 3, t is an integer of 1 or 2, provided that the total of s and t is not more than four.

The formula (4) corresponds to the formula (1) when s = 0 in the formula (1).

Among these, as examples of the organosilicon compound (b1) of the above formula (4), alkylalkoxysilane, alkyl(cycloalkyl)alkoxysilane, cycloalkylalkoxysilane, phenylalkoxysilane, alkyl(phenyl)alkoxysilane, alkyl(alkylamino) alkoxysilane, alkylaminoalkoxysilane, cycloalkyl(alkylamino)alkoxysilane, alkyl(cycloalkylamino)alkoxysilane, polycyclic aminoalkoxysilane, and alkyl(polycyclic amino)alkoxysilane can be given.

As $R^3$ in the above formula (4), an alkyl group such as a methyl group, an ethyl group, an isopropyl group, an isobutyl group, and a t-butyl group, a cyclopentyl group, and a cyclohexyl group are preferable, with an alkyl group having a secondary or tertiary carbon atom being more preferable, and an alkyl group having a secondary or tertiary carbon atom directly bonding to a silicon atom being particularly preferable. As $R^4$, a methyl group and an ethyl group are preferable. In addition, dialkoxysilane in which t is 2 is preferable.

As the organosilicon compound (b1), di-n-propyldimethoxysilane, diisopropyldimethoxysilane, di-n-butyldimethoxysilane, di-n-butyldiethoxysilane, t-butyl(methyl)dimethoxysilane, t-butyl(ethyl)dimethoxysilane, dicyclohexyldimethoxysilane, cyclohexyl(methyl)dimethoxysilane, dicyclopentyldimethoxysilane, cyclopentyl(methyl)diethoxysilane, cyclopentyl(ethyl)dimethoxysilane, cyclopentyl(cyclohexyl)dimethoxysilane, 3-methylcyclohexyl(cyclopentyl)dimethoxysilane, 4-methylcyclohexyl(cyclopentyl)dimethoxysilane, and 3,5-dimethylcyclohexyl(cyclopentyl)dimethoxysilane are preferably used, with particularly preferable organosilicon compounds being t-butyl(methyl)dimethoxysilane, t-butyl (ethyl)dimethoxysilane, dicyclohexyldimethoxysilane, cyclohexyl(methyl)dimethoxysilane, and dicyclopentyldimethoxysilane. These compounds may be used either individually or in combination of two or more as the organosilicon compound (b1).

As examples of the organosilicon compound (b2) of the above formula (5), alkyl(alkylamino)alkoxysilane, cycloalkyl(alkylamino)alkoxysilane, alkyl(cycloalkylamino)alkoxysilane, cycloalkyl(cycloalkylamino)alkoxysilane, alkylaminoalkoxysilane, cycloalkylaminoalkoxysilane, polycyclic aminoalkylalkoxysilane, and polycyclic aminoalkoxysilane can be given. As the polycyclic aminoalkoxysilane, bisperhydroquinolinodialkoxysilane and bisperhydroisoquinolinodialkoxysilane and the like can be given.

As $R^1$ in the above formula (5), an alkyl group such as a methyl group, an ethyl group, an isopropyl group, an isobutyl group, and a t-butyl group, a cyclopentyl group, and a cyclohexyl group are preferable; as $R^2$, a hydrogen atom, an alkyl group such as a methyl group, an ethyl group, an isopropyl group, an isobutyl group, and a t-butyl group, a cyclopentyl group, and a cyclohexyl group are preferable. It is also preferable that $R^1$ and $R^2$ bond to each other and form a polycyclic amino group together with N which bonds to Si, and more preferably an alkyl group or a polycyclic amino group having a secondary or tertiary carbon atom. As $R^3$, an alkyl group such as a methyl group, an ethyl group, an isopropyl group, an isobutyl group, and a t-butyl group, a cyclopentyl group, and a cyclohexyl group are preferable, with an alkyl group having a secondary or tertiary carbon atom being more preferable, and an alkyl group having a secondary or tertiary carbon atom directly bonding to a silicon atom being particularly preferable.

Specific examples of the organosilicon compound (b2) which are preferably used include bis(diethylamino) dimethoxysilane, bis(dipropylamino)dimethoxysilane, bis(diisopropylamino)dimethoxysilane, bis(dibutylamino)dimethoxysilane, bis(diisobutylamino)dimethoxysilane, bis(di-tert-butylamino)dimethoxysilane, bis(dicyclopentylamino)dimethoxysilane, bis(dicyclohexylamino)dimethoxysilane, bis(di-2-methylcyclohexylamino)dimethoxysilane, bisperhydroisoquinolinodimethoxysilane, bisperhydroquinolinodimethoxysilane, bis(ethylpropylamino)dimethoxysilane, bis(ethylisopropylamino)dimethoxysilane, bis(ethylbutylamino)dimethoxysilane, bis(ethylisobutylamino)dimethoxysilane, bis(ethyl-tert-butylamino)dimethoxysilane, bis(ethylcyclopentylamino)dimethoxysilane, bis(ethylcyclohexylamino)dimethoxysilane, bis(propylisopropylamino)dimethoxysilane, bis(propylbutylamino)dimethoxysilane, bis(propylisobutylamino)dimethoxysilane, bis(propyl-tert-butylamino)dimethoxysilane, bis(propylcyclopentylamino)dimethoxysilane, bis(propylcyclohexylamino)dimethoxysilane, ethyl(diethylamino)dimethoxysilane, ethyl(dipropylamino)dimethoxysilane, ethyl(diisopropylamino)dimethoxysilane, ethyl(dibutyllamino)dimethoxysilane, ethyl(isobutylamino)dimethoxysilane, ethyl(di-tert-butylamino)dimethoxysilane, ethyl(perhydroquinolino)dimethoxysilane, ethyl(perhydroisoquinolino)dimethoxysilane, propyl(diethylamino)dimethoxysilane, propyl(dipropylamino)dimethoxysilane, propyl(diisopropylamino)dimethoxysilane, propyl(dibutylamino)dimethoxysilane, propyl(diisobutylamino)dimethoxysilane, propyl(di-tert-butylamino)dimethoxysilane, propyl(perhydroquinolino)dimethoxysilane, propyl(perhydroisoquinolino)dimethoxysilane, isopropyl(diethylamino)dimethoxysilane, isopropyl(dipropylamino)dimethoxysilane, isopropyl(diisopropylamino)dimethoxysilane, isopropyl(dibutylamino)dimethoxysilane, isopropyl(diisobutylamino)dimethoxysilane, isopropyl(di-tert-butylamino)dimethoxysilane, isopropyl(perhydroquinolino)dimethoxysilane, isopropyl(perhydroisoquinolino)dimethoxysilane, butyl(diethylamino)dimethoxysilane, butyl(dipropylamino)dimethoxysilane, butyl(diisopropylamino)dimethoxysilane, butyl(dibutylamino)dimethoxysilane, butyl(diisobutylamino)dimethoxysilane, butyl(di-tert-butylamino)dimethoxysilane, butyl(perhydroquinolino)dimethoxysilane, butyl(perhydroisoquinolino)dimethoxysilane, isobutyl(diethylamino)dimethoxysilane, isobutyl(dipropylamino)dimethoxysilane, isobutyl(diisopropylamino)dimethoxysilane, isobutyl(dibutylamino)dimethoxysilane, isobutyl(diisobutylamino)dimethoxysilane, isobutyl(di-tert-butylamino)dimethoxysilane, isobutyl(perhydroquinolino)dimethoxysilane, isobutyl(perhydroisoquinolino)dimethoxysilane, tert-butyl(diethylamino)dimethoxysilane, tert-butyl(dipropylamino)dimethoxysilane, tert-butyl(diisopropylamino)dimethoxysilane, tert-butyl(dibutylamino)dimethoxysilane, tert-butyl(diisobuylamino)dimethoxysilane, tert-butyl(dibutylamino)dimethoxysilane, tert-butyl(perhydroquinolino)dimethoxysilane, tert-butyl(perhydroisoquinolino)dimethoxysilane, bis(diethylamino)diethoxysilane, bis(dipropylamino)diethoxysilane, bis(diisopropylamino)diethoxysilane, bis(dibutylamino)diethoxysilane, bis(diisobutylamino)diethoxysilane, bis(di-tert-butylamino)diethoxysilane, bis(dicyclopentylamino)diethoxysilane, bis(dicyclohexylamino)diethoxysilane, bis(di-2-methylcyclohexylamino)diethoxysilane, bisperhydroisoquinolinodiethoxysilane, bisperhydroquinolinodiethoxysilane, bis(ethylpropylamino)diethoxysilane, bis(ethylisopropylamino)diethoxysilane, bis(ethylbutylamino)diethoxysilane, bis(ethylisobutylamino)diethoxysilane, bis(ethyl-tert-butylamino)diethoxysilane, bis(ethylcyclopentylamino)diethoxysilane, bis(ethylcyclohexylamino)diethoxysilane, bis(propylisopropylamino)diethoxysilane, bis(propylbutylamino)diethoxysilane, bis(propylisobutylamino)diethoxysilane, bis(propyl-tert-butylamino)diethoxysilane, bis(propylcyclopentylamino)diethoxysilane, bis(propylcyclohexylamino)diethoxysilane, ethyl(diethylamino)diethoxysilane, ethyl(dipropylamino)diethoxysilane, ethyl(diisopropylamino)diethoxysilane, ethyl(dibutylamino)diethoxysilane, ethyl(isobutylamino)diethoxysilane, ethyl(di-tert-butylamino)diethoxysilane, ethyl(perhydroquinolino)diethoxysilane, ethyl(perhydroisoquinolino)diethoxysilane, propyl(diethylamino)diethoxysilane, propyl(dipropylamino)diethoxysilane, propyl(diisopropylamino)diethoxysilane, propyl(dibutylamino)diethoxysilane, propyl(diisobutylamino)diethoxysilane, propyl(di-tert-butylamino)diethoxysilane, propyl(perhydroquinolino)diethoxysilane, propyl(perhydroisoquinolino)diethoxysilane, isopropyl(diethylamino)diethoxysilane, isopropyl(dipropylamino)diethoxysilane, isopropyl(diisopropylamino)diethoxysilane, isopropyl(dibutylamino)diethoxysilane, isopropyl(diisobutylamino)diethoxysilane, isopropyl(di-tert-butylamino)diethoxysilane, isopropyl(perhydroquinolino)diethoxysilane, isopropyl(perhydroisoquinolino)diethoxysilane, butyl(diethylamino)diethoxysilane, butyl(dipropylamino)diethoxysilane, butyl(diisopropylamino)diethoxysilane, butyl(dibutylamino)diethoxysilane, butyl(diisobutylamino)diethoxysilane, butyl(di-tert-butylamino)diethoxysilane, butyl(perhydroquinolino)diethoxysilane, butyl(perhydroisoquinolino)diethoxysixlane, isobutyl(diethylamino)diethoxysilane, isobutyl(dipropylamino)diethoxysilane, isobutyl(diisopropylamino)diethoxysilane, isobutyl(dibutylamino)diethoxysilane, isobutyl(diisobutylamino)diethoxysilane, isobutyl(di-tert-butylamino)diethoxysilane, isobutyl(perhydroquinolino)diethoxysilane, isobutyl(perhydroisoquinolino)diethoxysilane, tert-butyl(diethylamino)diethoxysilane, tert-butyl(dipropylamino)diethoxysilane, tert-butyl(diisopropylamino)diethoxysilane, tert-butyl(dibutylamino)diethoxysilane, tert-butyl(diisobutylamino)diethoxysilane, tert-butyl(di-tert-butylamino)diethoxysilane, tert-butyl(perhydroquinolino)diethoxysilane, tert-butyl(perhydroisoquinolino)diethoxysilane, bis(isopropylamino)dimethoxysilane, bis(butylamino)dimethoxysilane, bis(sec-butylamino)dimethoxysilane, bis(tert-butylamino)dimethoxysilane, bis(cyclopentylamino)dimethoxysilane, bis(cyclohexylamino)dimethoxysilane, bis(2-methylcyclohexylamino)dimethoxysilane, bis(isopropylamino)diethoxysilane, bis(butylamino)diethoxysilane, bis(sec-butylamino)diethoxysilane, bis(tert-butylamino)diethoxysilane, bis(cyclopentylamino)diethoxysilane, bis(cyclohexylamino)diethoxysilane, bis(2-methylcyclohexylamino)diethoxysilane, methyl(isopropylamino)dimethoxysilane, ethyl(isopropylamino)dimethoxysilane, propyl(isopropylamino)dimethoxysilane, isopropyl(isopropylamino)dimethoxysilane, butyl(isopropylamino)dimethoxysilane, sec-butyl(isopropylamino)dimethoxysilane, tert-butyl(isopropylamino)dimethoxysilane, cyclopentyl(isopropylamino)dimethoxysilane, cyclohexyl(isopropylamino)dimethoxysilane, 2-methylcyclohexyl(isopropylamino)dimethoxysilane, methyl(butylamino)dimethoxysilane, ethyl(butyllamino)dimethoxysilane, propyl(butylamino)dimethoxysilane, isopropyl(butylamino)dimethoxysilane, butyl(butylamino)dimethoxysilane, sec-butyl(butylamino)dimethoxysilane, tert-butyl(butylamino)dimethoxysilane, cyclopentyl(butylamino)dimethoxysilane, cyclohexyl(butylamino)dimethoxysilane, 2-methylcyclohexyl(butylamino)dimethoxysilane, methyl(sec-butylamino)dimethoxysilane, ethyl(sec-butylamino)dimethoxysilane, propyl(sec-butylamino)dimethoxysilane, isopropyl(sec-butylamino)dimethoxysilane, butyl(sec-butylamino)dimethoxysilane, butyl(sec-butylamino)dimethoxysilane, tert-butyl(sec-butylamino)dimethoxysilane, cyclopentyl(sec-butylamino)dimethoxysilane, cyclohexyl(sec-butylamino)dimethoxysilane, 2-methylcyclohexyl(sec-butylamino)dimethoxysilane, methyl(tert-butylamino)dimethoxysilane, ethyl(tert-butylamino)dimethoxysilane, propyl(tert-butylamino)dimethoxysilane, isopropyl(tert-butylamino)dimethoxysilane, butyl(tert-butylamino)dimethoxysilane, sec-butyl(tert-butylamino)dimethoxysilane, tert-butyl(tert-butylamino)dimethoxysilane, cyclopentyl(tert-butylamino)dimethoxysilane, cyclohexyl(tert-butylamino)dimethoxysilane, 2-methylcyclohexyl(tert-butylamino)dimethoxysilane, methyl(cyclopentylamino)dimethoxysilane, ethyl(cyclopentylamino)dimethoxysilane, propyl(cyclopentylamino)dimethoxysilane, isopropyl(cyclopentylamino)dimethoxysilane, butyl(cyclopentylamino)dimethoxysilane, sec-butyl(cyclopentylamino)dimethoxysilane, tert-butyl(cyclopentylamino)dimethoxysilane, cyclopentyl(cyclopentylamino)dimethoxysilane, cyclohexyl(cyclopentylamino)dimethoxysilane, 2-methylcyclohexyl(cyclopentylamino)dimethoxysilane, methyl(cyclohexylamino)dimethoxysilane, ethyl(cyclohexylamino)dimethoxysilane, propyl(cyclohexylamino)dimethoxysilane, isopropyl(cyclohexylamino)dimethoxysilane, butyl(cyclohexylamino)dimethoxysilane, sec-butyl(cyclohexylamino)dimethoxysilane, tert-butyl(cyclohexylamino)dimethoxysilane, cyclopentyl(cyclohexylamino)dimethoxysilane, cyclohexyl(cyclohexylamino)dimethoxysilane, 2-methylcyclohexyl(cyclohexylamino)dimethoxysilane, methyl(2-methylcyclohexylamino)dimethoxysilane, ethyl(2-methylcyclohexylamino)dimethoxysilane, propyl(2-methylcyclohexylamino)dimethoxysilane, isopropyl(2-methylcyclohexylamino)dimethoxysilane, butyl(2-methylcyclohexylamino)dimethoxysilane, sec-butyl(2-methylcyclohexylamino)dimethoxysilane, tert-butyl(2-methylcyclohexylamino)dimethoxysilane, cyclopentyl(2-methylcyclohexylamino)dimethoxysilane, cyclohexyl(2-methylcyclohexylamino)dimethoxysilane, 2-methylcyclohexyl(2-methylcyclohexylamino)dimethoxysilane, methyl(isopropylamino)diethoxysilane, ethyl(isopropylamino)diethoxysilane, propyl(isopropylamino)diethoxysilane, isopropyl(isopropylamino)diethoxysilane, butyl(isopropylamino)diethoxysilane, sec-butyl(isopropylamino)diethoxysilane, tert-butyl(isopropylamino)diethoxysilane, cyclopentyl(isopropylamino)diethoxysilane, cyclohexyl(isopropylamino)diethoxysilane, 2-methylcyclohexyl(isopropylamino)diethoxysilane, methyl(butylamino)diethoxysilane, ethyl(butyllamino)diethoxysilane, propyl(butylamino)diethoxysilane, isopropyl(butylamino)diethoxysilane, butyl(butylamino)diethoxysilane, sec-butyl(butylamino)diethoxysilane, tert-butyl(butylamino)diethoxysilane, cyclopentyl(butylamino)diethoxysilane, cyclohexyl(butylamino)diethoxysilane, 2-methylcyclohexyl(butylamino)diethoxysilane, methyl(butylamino)diethoxysilane, methyl(sec-butylamino)diethoxysilane, ethyl(sec-butylamino)diethoxysilane, propyl(sec-butylamino)diethoxysilane, isopropyl(sec-butylamino)diethoxysilane, butyl(sec-butylamino)diethoxysilane, butyl(sec-butylamino)diethoxysilane, tert-butyl(sec-butylamino)diethoxysilane, cyclopentyl(sec-butylamino)diethoxysilane, cyclohexyl(sec-butylamino)diethoxysilane, 2-methylcyclohexyl(sec-butylamino)diethoxysilane, methyl(tert-butylamino)diethoxysilane, ethyl(tert-butylamino)diethoxysilane, propyl(tert-butylamino)diethoxysilane, isopropyl(tert-butylamino)diethoxysilane, butyl(tert-butylamino)diethoxysilane, sec-butyl(tert-butylamino)diethoxysilane, tert-butyl(tert-butylamino)diethoxysilane, cyclopentyl(tert-butylamino)diethoxysilane, cyclohexyl(tert-butylamino)diethoxysilane, 2-methylcyclohexyl(tert-butylamino)diethoxysilane, methyl(cyclopentylamino)diethoxysilane, ethyl(cyclopentylamino)diethoxysilane, propyl(cyclopentylamino)diethoxysilane, isopropyl(cyclopentylamino)diethoxysilane, butyl(cyclopentylamino)diethoxysilane, sec-butyl(cyclopentylamino)diethoxysilane, tert-butyl(cyclopentylamino)diethoxysilane, cyclopentyl(cyclopentylamino)diethoxysilane, cyclohexyl(cyclopentylamino)diethoxysilane, 2-methylcyclohexyl(cyclopentylamino)diethoxysilane, methyl(cyclohexylamino)diethoxysilane, ethyl(cyclohexylamino)diethoxysilane, propyl(cyclohexylamino)diethoxysilane, isopropyl(cyclohexylamino)diethoxysilane, butyl(cyclohexylamino)diethoxysilane, sec-butyl(cyclohexylamino)diethoxysilane, tert-butyl(cyclohexylamino)diethoxysilane, cyclopentyl(cyclohexylamino)diethoxysilane, cyclohexyl(cyclohexylamino)diethoxysilane, 2-methylcyclohexyl(cyclohexylamino)diethoxysilane, methyl(2-methylcyclohexylamino)diethoxysilane, ethyl(2-methylcyclohexylamino)diethoxysilane, propyl(2-methylcyclohexylamino)diethoxysilane, isopropyl(2-methylcyclohexylamino)diethoxysilane, butyl(2-methylcyclohexylamino)diethoxysilane, sec-butyl(2-methylcyclohexylamino)diethoxysilane, tert-butyl(2-methylcyclohexylamino)diethoxysilane, cyclopentyl(2-methylcyclohexylamino)diethoxysilane, cyclohexyl(2-methylcyclohexylamino)diethoxysilane, 2-methylcyclohexyl(2-methylcyclohexylamino)diethoxysilane, methyl(isopropylamino)dipropoxysilane, ethyl(isopropylamino)dipropoxysilane, propyl(isopropylamino)dipropoxysilane, isopropyl(isopropylamino)dipropoxysilane, butyl(isopropylamino)dipropoxysilane, sec-butyl(isopropylamino)dipropoxysilane, tert-butyl(isopropylamino)dipropoxysilane, cyclopentyl(isopropylamino)dipropoxysilane, cyclohexyl(isopropylamino)dipropoxysilane, 2-methylcyclohexyl(isopropylamino)dipropoxysilane, methyl(butylamino)dipropoxysilane, ethyl(butyllamino)dipropoxysilane, propyl(butylamino)dipropoxysilane, isopropyl(butylamino)dipropoxysilane, butyl(butylamino)dipropoxysilane, sec-butyl(butylamino)dipropoxysilane, tert-butyl(butylamino)dipropoxysilane, cyclopentyl(butylamino)dipropoxysilane, cyclohexyl(butylamino)dipropoxysilane, 2-methylcyclohexyl(butylamino)dipropoxysilane, methyl(sec-butylamino)dipropoxysilane, ethyl(sec-butylamino)dipropoxysilane, propyl(sec-butylamino)dipropoxysilane, isopropyl(sec-butylamino)dipropoxysilane, butyl(sec-butylamino)dipropoxysilane, sec-butyl(sec-utylamino)dipropoxysilane, tert-butyl(sec-butylamino)dipropoxysilane, cyclopentyl(sec-butylamino)dipropoxysilane, cyclohexyl(sec-butylamino)dipropoxysilane, 2-methylcyclohexyl(sec-butylamino)dipropoxysilane, methyl(tert-butylamino)dipropoxysilane, ethyl(tert-butylamino)dipropoxysilane, propyl(tert-butylamino)dipropoxysilane, isopropyl(tert-butylamino)dipropoxysilane, butyl(tert-butylamino)dipropoxysilane, sec-butyl(tert-butylamino)dipropoxysilane, tert-butyl(tert-butylamino)dipropoxysilane, cyclopentyl(tert-butylamino)dipropoxysilane, cyclohexyl(tert-butylamino)dipropoxysilane, 2-methylcyclohexyl(tert-butylamino)dipropoxysilane, methyl(cyclopentylamino)dipropoxysilane, ethyl(cyclopentylamino)dipropoxysilane, propyl (cyclopentylamino)dipropoxysilane, isopropyl(cyclopentylamino)dipropoxysilane, butyl(cyclopentylamino)dipropoxysilane, sec-butyl(cyclopentylamino)dipropoxysilane, sec-butyl(cyclopentylamino)dipropoxysilane, cyclopentyl(cyclopentylamino)dipropoxysilane, cyclohexyl(cyclopentylamino)dipropoxysilane, 2-methylcyclohexyl(cyclopentylamino) dipropoxysilane, methyl(cyclohexylamino)dipropoxysilane, ethyl(cyclohexylamino)dipropoxysilane, propyl(cyclohexylamino)dipropoxysilane, isopropyl(cyclohexylamino)dipropoxysilane, butyl(cyclohexylamino)dipropoxysilane, sec-butyl (cyclohexylamino)dipropoxysilane, sec-butyl(cyclohexylamino)dipropoxysilane, cyclopentyl(cyclohexylamino)dipropoxysilane, cyclohexyl(cyclohexylamino)dipropoxysilane, 2-methylcyclohexyl(cyclohexylamino)dipropoxysilane, methyl(2-methylcyclohexylamino)dipropoxysilane, ethyl(2-methylcyclohexylamino)dipropoxysilane, propyl(2-methylcyclohexylamino)dipropoxysilane, isopropyl(2-methylcyclohexylamino)dipropoxysilane, butyl(2-methylcyclohexylamino)dipropoxyamine, sec-butyl(2-methylcyclohexylamino)dipropoxysilane, tert-butyl(2-methylcyclohexylamino)dipropoxysilane, cyclopentyl(2-methylcyclohexylamino)dipropoxysilane, cyclohexyl(2-methylcyclohexylamino)dipropoxysilane, and 2-methylcyclohexyl(2-methylcyclohexylamino)dipropoxysilane. Of these, bisperhydroquinolinodimethoxysilane, bisperhydroisoquinolinodimethoxysilane, ethyl(tert-butylamino)dimethoxysilane, and ethyl(tert-butylamino)diethoxysilane are particularly preferable. Either one type of these organosilicon compounds (b2) or a combination of two or more types of these compounds can be used in the present invention.

As the organosilicon compound (c) which constitutes the solid catalyst component for olefin polymerization of the present invention, a compound represented by the following formula (6) (hereinafter referred to from time to time as "component (c1)") and a compound represented by the following formula (7) (hereinafter referred to from time to time as "component (c2)") can be given.

$$[CH_2=CH-(CH_2)_{n1}]_q SiR^5_{4-q} \qquad (6)$$

wherein n1 is an integer of 1 to 5 and $R^5$ and q are the same as those defined above.

$$(CH_2=CH-)_q SiR^5_{4-q} \qquad (7)$$

wherein $R^5$ and q are the same as defined above. The formula (7) corresponds to the formula (2) when n = 0 in the formula (2).

As the compound (c1) of the above formula (6), an alkenyl group-containing alkylsilane, an alkenyl group-containing cycloalkylsilane, an alkenyl group-containing phenylsilane, an alkenyl group-containing vinylsilane, alkenyl group-containing alkyl halogenated silane, and an alkenyl group-containing halogenated silane can be given. As the compound (c2) of the above formula (7), a vinyl group-containing alkylsilane, a vinyl group-containing cycloalkylsilane, a vinyl group-containing phenylsilane, a vinyl group-containing phenylsilane, a vinyl group-containing halogenated silane, and a vinyl group-containing alkyl halogenated silane can be given. Among these, as preferable compounds used together with the organosilicon compound (b1), the organosilan compounds (c1), specifically, an alkenyl group-containing alkylsilane, an alkenyl group-containing cycloalkylsilane, an alkenyl group-containing phenylsilane, an alkenyl group-containing vinylsilane, alkenyl group-containing alkyl halogenated silane, and an alkenyl group-containing halogenated silane can be given. As preferable compounds used together with the organosilicon compound (b2), the organosilane compounds (c1) and the organosilane compounds (c2) (hereinafter referred to as organosilane compounds (c) when an organosilane compound (c1) and an organosilane compound (c2) are used in combination), specifically a vinyl group-containing alkylsilane, a vinyl group-containing cycloalkylsilane, a vinyl group-containing phenylsilane, a vinyl group-containing halogenated silane, a vinyl group-containing alkyl halogenated silane, an alkenyl group-containing alkylsilane, an alkenyl group-containing cycloalkylsilane, an alkenyl group-containing phenylsilane, an alkenyl group-containing vinylsilane, an alkenyl group-containing alkyl halogenated silane, and an alkenyl group-containing halogenated silane can be given. The alkenyl group here is a group represented by the formula $CH_2=CH-(CH_2)_n-$. In the above formula (2), $R^5$ is preferably a methyl group, an ethyl group, a vinyl group, or a chlorine atom, q is preferably 2 or 3 (i.e. the compound is a dialkenylsilane or a trialkenylsilane), and n is 1 or 2 (i.e. the compound is allylsilane or 3-butenylsilane). A particularly preferred compound to be used together with the organosilicon compound (b1) is a diallyldialkylsilane, and a particularly preferred compound to be used together with the organosilicon compound (b2) is a vinyltrialkylsilane, a divinyldialkylsilane, an allylvinyldialkylsilane, an allyltrialkylsilane, a diallyldialkylsilane, a diallyldihalide, a triallylalkylsilane, and a diallyldialkylsilane. Olefin polymers with a broad molecular weight distribution can be obtained by using the organosilicon compound (b2) and the organosilicon compound (c) in combination.

Specific examples of the organosilicon compound (c) include allyltriethylsilane, allyltrivinylsilane, allylmethyl divinylsilane, allyldimethyl vinylsilane, allylmethyl dichlorosilane, allyltrichlorosilane, allyltribromosilane, diallyldimethylsilane, diallyldiethylsilane, diallyldivinylsilane, diallylmethylvinylsilane, diallylmethylchlorosilane, diallyldichlorosilane, diallyldibromosilane, triallylmethylsilane, triallylethylsilane, triallylvinylsilane, triallylchlorosilane, triallylbromosilane,

**EP 1 829 898 A1**

Tetraallylsilane, di-3-butenylsilane dimethylsilane, di-3-phenylsilane diethylsilane, di-3-butenylsilane divinylsilane, di-3-butenylsilane methylvinylsilane, di-3-butenylsilane methylchlorosilane, di-3-butenylsilane dichlorosilane, diallyldibromosilane, triallylmethylsilane, tri-3-butenylsilane ethylsilane, tri-3-butenylsilane vinylsilane, tri-3-butenylsilane chlorosilane, tri-3-butenylsilane bromosilane, and tetra-3-butenylsilanesilane. Of these, allyldimethyl vinylsilane, diallyldimethylsilane, triallylmethylsilane, di-3-butenylsilane dimethylsilane, diallyldichlorosilane, and allyltriethylsilane are particularly preferable. These compounds may be used either individually or in combination of two or more as the organosilicon compound (c).

Although any compounds represented by the above formula (3) can be used without any specific limitation as the organoaluminum compound (d) for preparing the solid catalyst for polymerization of olefins of the present invention, $R^6$ is preferably an ethyl group or an isobutyl group, Q is preferably a hydrogen atom, a chlorine atom, or a bromine atom, and r is preferably 2 or 3, and particularly preferably 3. As specific examples of such organoaluminum compounds (d), triethylaluminum, diethylaluminum chloride, triisobutylaluminum, diethylaluminum bromide, and diethylaluminum hydride can be given. These compounds may be used either individually or in combination of two or more. Of these, triethylaluminum and triisobutylaluminum are preferable.

As the solid catalyst component (A) of the present invention, there are a solid catalyst component (A1) (hereinafter referred to from time to time as "component (A1)") prepared by a process of using the organosilicon compound (b1) (hereinafter referred to from time to time as "process 1") and a solid catalyst component (A2) (hereinafter referred to from time to time as "component (A2)") prepared by a process of using the organosilicon compound (b2) (hereinafter referred to from time to time as "process 2").

The solid catalyst component (A1) contains magnesium, titanium, a halogen, the component (b1), and the component (c1) or a polymer of the component (c1), and can be obtained by causing the component (b1), the component (c1), and the component (d) to come in contact with the solid component (a). Although the component (c1) may be ultimately present in the solid catalyst component in the form of a polymer, the component (c1) is polymerized and added when the components (a), (b1), (c1), and (d) are caused to come in contact with each other.

To ensure easy operation, the components (a), (b1), (c1), and (d) are caused to come in contact with each other in the presence of an inert solvent. As the inert solvent, an aliphatic hydrocarbon such as hexane, heptane, and cyclohexane, an aromatic hydrocarbon such as toluene, xylene, and ethylbenzene, and the like can be used. Although there are no specific limitations to the order of contacting these components, the following orders are preferable.

(1) Component (a) + component (b1) + component (c1) + component (d)
(2) Component (a) + component (b1) + component (c1) → component (d)
(3) Component (a) + component (b1) → component (c1) + component (d)
(4) Component (a) + component (c1) → component (b) + component (d)
(5) Component (a) + component (d) → component (b1) + component (c1)
(6) Component (a) → component (b1) + component (c1) (previously mixed) → component (d)
(7) Component (a) → component (c1) + component (d) (previously mixed) → component (b1)

Among the above orders of contact, a process of first contacting the component (a) with the component (b1) or the component (c1), then causing the component (d) to come in contact with the resulting mixture is preferable. A process of first contacting the component (a) with the component (c1), and causing the component (b1) and the component (d) to come in contact with the resulting mixture is more preferable. Alternatively, when the component (d) is first caused to come in contact with the component (a), the operation of contacting the component (a) with the component (d) may be carried out in the presence of the component (b1) or the component (c1). After contacting each component as mentioned above, the mixture is washed with an inert solvent such as heptane to remove unnecessary components. A mixture containing the component (d) must be washed particularly sufficiently because the component (d) contained in a solid catalyst component lowers the catalytic activity over time. After causing the components (b1), (c1), and (d) to come in contact with the component (a), the components (b1), (c1), and (d) may be repeatedly caused to come in contact with the mixture once again or two or more times. Causing a polysiloxane (e) to come in contact when the above-mentioned organosilicon compound (b1), organosilicon compound (c1), and organoaluminum compound (d) are caused to come in contact with the solid component (a) is preferable in order to obtain a polymer with a broad molecular weight distribution, improved stereoregularity or crystal properties, and to reduce production of fine powder in the polymer.

The same polysiloxane as the polysiloxane (v) used when preparing the solid component (a) can be used as the polysiloxane (e).

Preferable combinations of the component (b1) and the component (c1) used in preparing the solid catalyst component by the process 1 are shown in Table 1.

TABLE 1

|  | Component (b1) | Component (c1) |
|---|---|---|
| (1) | t-butyl(methyl)dimethoxysilane | diallyldimethylsilane |
| (2) | cyclohexyl(methyl)dimethoxysilane | diallyldimethylsilane |
| (3) | dicyclopentyldimethoxysilane | diallyldimethylsilane |
| (4) | t-butyl(methyl)dimethoxysilane | allyldimethylvinylsilane |
| (5) | t-butyl(methyl)dimethoxysilane | triallylmethylsilane |
| (6) | t-butyl(ethyl)dimethoxysilane | diallyldimethylsilane |
| (7) | t-butyl(ethyl)dimethoxysilane | triallylmethylsilane |
| (8) | t-butyl(ethyl)dimethoxysilane | diallyldichlorosilane |
| (9) | t-butyl(ethyl)dimethoxysilane | allyldimethylvinylsilane |
| (10) | t-butyl(ethyl)dimethoxysilane | allyltriethylsilane |

The ratio of each component used is not specifically limited inasmuch to the extent that the effect of the present invention is not adversely affected. Usually, the component (b1) and the component (c1) are used in an amount of 0.5 to 10 mols, and preferably 1 to 5 mols, per one mol of titanium atom in the component (a). The component (d) is used in an amount of 1 to 15 mols, preferably 3 to 10 mols, and particularly preferably 4 to 7 moles, per one mol of the component (a).

The temperature at which the components are caused to come in contact is -10°C to 100°C, preferably 0°C to 80°C, and particularly preferably 25°C to 75°C. The contact is carried out for 1 minute to 10 hours, preferably for 10 minutes to 5 hours, and particularly preferably for 30 minutes to 2 hours. The component (c1) particularly polymerizes according to the conditions under which the component (c1) is caused to come in contact, thereby producing a polymer. When the temperature is 30°C or more, the component (c1) starts to polymerize and improves crystal properties and catalytic activity of the resulting olefin polymer.

The solid catalytic component (A1) obtained by the above process 1 contains magnesium, titanium, halogen, the component (b1), and the component (c1) or the polymer thereof. The content of magnesium is from 10 to 70 wt%, and preferably from 10 to 50 wt%; the content of titanium is from 1.0 to 8.0 wt%, and preferably from 2.0 to 8.0 wt%; the content of halogen is from 20 to 90 wt%, and preferably from 30 to 85 wt%; the content of the component (b1) is from 1.0 to 50 wt%, and preferably from 1.0 to 30 wt%; and the component (c1) or the polymer thereof is from 1.0 to 50 wt%, and preferably from 1.0 to 30 wt%.

The solid catalyst component (A2) is obtained by the process 2, wherein the organosilicon compound (b2), the organosilicon compound (c) represented by the above formula (2), and the organoaluminum compound (d) represented by the above formula (3) are caused to come in contact with the solid component (a) containing magnesium, titanium, halogen, and an electron donor compound.

As examples of the organosilicon compound (c) preferably used in the process 2, vinyltrimethylsilane, vinyltriethylsilane, vinylmethyldichlorosilane, vinyltrichlorosilane, vinyltribromosilane, divinyldimethylsilane, divinyldiethylsilane, divinylmethylchlorosilane, divinyldichlorosilane, divinyldibromosilane, trivinylmethylsilane, trivinylethylsilane, trivinylchlorosilane, trivinylbromosilane, tetra-vinylsilane, allyltriethylsilane, allyltrivinylsilane, allylmethyldivinylsilane, allyldimethylvinylsilane, allylmethyldichlorosilane, allyltrichlorosilane, allyltribromosilane, diallyldimethylsilane, diallyldiethylsilane, diallyldivinylsilane, diallylmethylvinylsilane, diallylmethylchlorosilane, diallyldichlorosilane, diallyldibromosilane, triallylmethylsilane, triallylethylsilane, triallylvinylsilane, triallylchlorosilane, triallylbromosilane, tetra-allylsilane, di-3-butenyldimethylsilane, di-3-butenyldiethylsilane, di-3-butenyldivinylsilane, di-3-butenylmethylvinylsilane, di-3-butenylmethylchlorosilane, di-3-butenyldichlorosilane, di-3-butenyldibromosilane, tri-3-butenylmethylsilane, tri-3-butenylethylsilane, tri-3-butenylvinylsilane, tri-3-butenylchlorosilane, tri-3-butenylbromosilane, and tetra-3-butenylsilane can be given. Of these, vinyltrimethylsilane, divinyldimethylsilane, allyldimethylvinylsilane, diallyldimethylsilane, triallylmethylsilane, di-3-butenyldimethylsilane, diallyldichlorosilane, allyltriethylsilane, and the like are particularly preferable. Either one type of these organosilicon compounds (c) or a combination of two or more types of these compounds can be used in the present invention.

<Preparation of solid catalyst component (A2)>

The solid catalyst component (A2) is obtained by causing the component (b2), the component (c), and the component (d) to come in contact with the solid component (a). To ensure easy operation, the components (a), (b2), (c), and (d) are caused to come in contact with each other in the presence of an inert solvent. As the inert solvent, an aliphatic hydrocarbon such as hexane, heptane, and cyclohexane, an aromatic hydrocarbon such as toluene, xylene, and ethylbenzene, and the like can be used. Although there are no specific limitations to the order of contacting these components, the following orders are preferable.

(1) Component (a) + component (b2) + component (c) + component (d)
(2) Component (a) + component (b2) + component (c) → component (d)
(3) Component (a) + component (b2) → component (c) + component (d)
(4) Component (a) + component (c) → component (b2) + component (d)
(5) Component (a) + component (d) → component (b2) + component (c)
(6) Component (a) → component (b2) + component (c) (previously mixed) → component (d)
(7) Component (a) → component (c) + component (d) (previously mixed) → component (b2)

Among the above orders of contact, a process of first contacting the component (a) with the component (b2) or the component (c), then causing the component (d) to come in contact with the resulting mixture is preferable. When first contacting the component (a) with the component (c), and causing the component (c) and the component (d) to come in contact with the resulting mixture, the latter contact is carried out in the presence of the component (b2) or the component (c). After contacting each component as mentioned above, the mixture is washed with an inert solvent such as heptane to remove unnecessary components. A mixture containing the component (d) must be washed particularly sufficiently because the component (d) contained in a solid catalyst component causes to lower the catalytic activity over time. After causing the components (b2), (c), and (d) to come in contact with the component (a), the components (b2), (c), and (d) may be repeatedly caused to come in contact with the mixture once again or two or more times.
Preferable combinations of the component (b2) and the component (c) used in preparing the solid catalyst component by the process 2 are shown in Table 2.

TABLE 2

|  |  | Component (b2) | Component (c) |
|---|---|---|---|
|  | (1) | bisperhydroisoquinolinodimethoxysilane | diallyldimethylsilane |
|  | (2) | bisperhydroisoquinolinodimethoxysilane | diallyldimethylsilane |
|  | (3) | ethyl(tert-butylamino)dimethoxysilane | diallyldimethylsilane |
|  | (4) | bisperhydroisoquinolinodimethoxysilane | allyldimethylvinylsilane |
|  | (5) | bisperhydroisoquinolinodimethoxysilane | triallylmethylsilane |
|  | (6) | ethyl(tert-butylamino)diethoxysilane | diallyldimethylsilane |
|  | (7) | ethyl(tert-butylamino)diethoxysilane | allyldimethylvinylsilane |
|  | (8) | ethyl(tert-butylamino)diethoxysilane | triallylmethylsilane |
|  | (9) | ethyl(tert-butylamino)diethoxysilane | diallyldichlorosilane |
|  | (10) | ethyl(tert-butylamino)diethoxysilane | allyltriethylsilane |
|  | (11) | bisperhydroisoquinolinodimethoxysilane | divinyldimethylsilane |
|  | (12) | bisperhydroisoquinolinodimethoxysilane | vinyltrimethylsilane |

The ratio of each component used is arbitrarily determined to the extent that the effect of the present invention is not adversely affected. Usually, the component (b2) and the component (c) are used in an amount of 0.2 to 10 mols, and preferably 0.5 to 5 mols, per one mol of titanium atom in the component (a). The component (d) is used in an amount of 0.5 to 15 mols, preferably 1 to 10 mols, and particularly preferably 1.5 to 7 moles, per one mol of titanium atom in the component (a).
The temperature at which the components are caused to come in contact is -10°C to 100°C, preferably 0°C to 90°C, and particularly preferably 20°C to 80°C. The contact is carried out for 1 minute to 10 hours, preferably for 10 minutes to 5 hours, and particularly preferably for 30 minutes to 2 hours. The component (c) particularly polymerizes according to the conditions under which the component (c) is caused to come in contact, thereby producing a polymer. When the temperature is 30°C or more, the component (c) starts to polymerize. A part or the whole of the component (c) becomes a polymer and improves crystal properties and catalytic activity of the resulting olefin polymer.

The solid catalytic component (A2) obtained by the above process 2 contains magnesium, titanium, halogen, the component (b2), and the component (c) or the polymer thereof. The content of magnesium is from 10 to 70 wt%, and preferably from 10 to 50 wt%; the content of titanium is from 1.0 to 8.0 wt%, and preferably from 2.0 to 8.0 wt%; the content of halogen is from 20 to 90 wt%, and preferably from 30 to 85 wt%; the content of the component (b2) is from 1.0 to 50 wt%, and preferably from 1.0 to 30 wt%; and the component (c) is from 1.0 to 50 wt%, and preferably from 1.0 to 30 wt%.

As the organoaluminum compound (B) used for preparing the catalyst for polymerization of olefins of the present invention, the same organoaluminum compounds as the component (d) mentioned above, preferably triethylaluminum and triisobutylaluminum can be used.

In addition to the above solid catalyst component (A1), the solid catalyst component (A2), and the component (B), an organosilicon compound (C) (hereinafter referred to from time to time simply as "component (C)") may be used for preparing the catalyst for polymerization of olefins of the present invention. Although the catalyst for polymerization of olefins can maintain high activity and high stereoregularity without using the component (C), the catalyst can exhibit even higher activity and higher stereoregularity if the component (C) is used in combination with the component (A1) or (A2) and the component (B). As the component (C), the same compounds as previously given as examples of the component (b) or the component (e), preferably ethyl(t-butylamino)dimethoxysilane, ethyl(t-butylamino)diethoxysilane, di-n-propyldimethoxysilane, diisopropyldimethoxysilane, dicyclopentyldimethoxysilane, dicyclohexyldimethoxysilane, cyclohexylmethyldimethoxysilane, and cyclopentylcyclohexyldimethoxysilane can be given.

Olefins are polymerized or copolymerized by random or block copolymerization in the presence of the catalyst for olefin polymerization of the present invention. As olefins used in the polymerization, olefins such as ethylene, propylene, 1-butene, 1-pentene, 4-methyl-1-pentene, and vinyl cyclohexane can be used either individually or in combination of two or more. Of these, ethylene, propylene, and 1-butene can be suitably used. A particularly preferable olefin is propylene. Propylene may be copolymerized with one or more other olefin monomers. As the olefins to be copolymerized, ethylene, propylene, 1-butene, 1-pentene, 4-methyl-1-pentene, vinyl cyclohexane, and the like can be used either individually or in combination of two or more. Of these, ethylene and 1-butene can be suitably used. As the process for copolymerizing propylene with other olefins, random copolymerization of polymerizing propylene with a small amount of ethylene as a comonomer in one step, and propylene-ethylene block copolymerization of polymerizing only propylene in a first step (first polymerization vessel) and copolymerizing propylene and ethylene in a second step (second polymerization vessel) can be given as typical processes. The catalyst of the present invention comprising the components (A1) or (A2) and component (B), or component (C) is effective in both the random copolymerization and block copolymerization for improving the catalytic activity, stereoregularity, and/or hydrogen response, copolymerization performance, and properties of resulting copolymers. Particularly, in the random copolymerization of propylene and ethylene, an excellent copolymer with a high degree of randomness with a high ethylene content of 5 to 10 wt% can be obtained. In addition, a copolymer with a high rubber content can be obtained by the block copolymerization of ethylene and propylene. An alcohol may be added to the polymerization reaction system in order to prevent formation of gel in the finished product, particularly when shifting from homopolymerization of propylene to the block copolymerization. As specific examples of the alcohol, ethyl alcohol and isopropyl alcohol can be given. These alcohols are used in an amount of 0.01 to 10 mols, and preferably 0.1 to 2 mols, for one mol of the component (B).

The ratio of each component used is arbitrarily selected to the extent that the effect of the present invention is not adversely affected. Usually, the component (B) is used in an amount of 1 to 2,000 mols, and preferably 50 to 1,000 mols, per one mol of titanium atom in the component (A1) or the component (A2). The component (C) is used in an amount of 0.002 to 10 mols, preferably 0.01 to 2 mols, and particularly preferably 0.1 to 0.5 mol, per one mol of the component (B).

Although the order of contact of the components is not arbitrarily determined, it is desirable to first add the organoaluminum compound (B) to the polymerization system and then cause the solid catalyst components (A1) or (A2) to come in contact with the organoaluminum compound (B). When the component (C) is used, the organoaluminum compound (B) is first added to the polymerization system, then the component (C) is added, following which the solid catalyst components (A1) or (A2) is caused to come in contact with the mixture.

In the present invention, polymerization can be carried out either in the presence or in the absence of an organic solvent. Olefin monomers such as propylene may be used either in a gaseous state or in a liquid state. The polymerization reaction is preferably carried out at a temperature of 200°C or less, and preferably at 100°C or less, under a pressure of 10 MPa or less, and preferably 6 MPa or less. Either a continuous polymerization system or a batch polymerization system may be used for the polymerization reaction. In addition, the polymerization can be completed either in one step or in two or more steps.

In polymerizing olefins using the catalyst formed from the component (A1) or (A2) and the component (B), or the component (C) (hereinafter may be referred to from time to time as "main polymerization"), it is desirable to preliminarily polymerize the olefins prior to the main polymerization to further improve the catalytic activity, stereoregularity, properties of resulting polymer particles, and the like. In addition to the olefins used in the main polymerization, monomers such as styrene can be used in the preliminary polymerization. Specifically, after causing the components (A1) or (A2) to come contact with the component (B) or the component (C) in the presence of olefins to preliminarily polymerize and produce 0.1 to 100 g of the polyolefins for 1 g of the component (A1) or (A2), the component (B) and/or the component (C) are caused to come in contact to form the catalyst.

Although the order of contact of the components and monomers in carrying out the preliminary polymerization is optional, it is desirable to first add the component (B) to the preliminary polymerization system in an inert gas or olefin gas atmosphere such as propylene, cause the component (A1) or (A2) to contact the component (B), and then cause one or more olefins such as propylene to contact the mixture. Although not specifically limited, the preliminary polymerization temperature is from -10°C to 70°C, and preferably from 0°C to 50°C.

The polymerization of olefins in the presence of the olefin polymerization catalyst of the present invention can produce olefin polymers in a higher yield than in the polymerization using a conventional catalyst, while maintaining a higher stereoregularity of the polymer and improved hydrogen response.

The present invention will be described in more detail by examples, which should not be construed as limiting the present invention.

Example 1

(Preparation of solid component)

A 2,000 ml round bottom flask equipped with a stirrer, of which the internal atmosphere had been sufficiently replaced with nitrogen gas, was charged with 150 g of diethoxymagnesium and 750 ml of toluene to prepare a suspension. The suspension was added to a solution of 450 ml of toluene and 300 ml of titanium tetrachloride in another 2,000 ml round bottom flask equipped with a stirrer, of which the internal atmosphere had been sufficiently replaced with nitrogen gas. The suspension was reacted at 5°C for one hour. After the addition of 22.5 ml of di-n-butyl phthalate, the mixture was heated to 100°C and reacted for two hours with stirring (first reaction). After the reaction, the resulting reaction mixture was washed four times with 1,300 ml of toluene at 80°C. After the addition of 1,200 ml of toluene and 300 ml of titanium tetrachloride, the reaction mixture was heated to 110°C and reacted for two hours with stirring (second reaction). The intermediate washing and the second reaction was repeated once more. The resulting reaction mixture was washed seven times with 1,300 ml of heptane at 40°C, filtered, and dried to obtain a solid component in the form of a powder. The content of titanium in the solid component was measured and found to be 2.9 wt%.

(Preparation of solid catalyst component)

30 g of the solid component obtained above was suspended in 100 ml of heptane, 27 mmol of diallyldimethylsilane was added to the suspension, and the mixture was reacted at 70°C for two hours. After the reaction, the resulting reaction solution was cooled to 30°C. 27 mmol of t-butylethyldimethoxysilane and 90 mmol of triethylaluminum were added and the mixture was stirred at 30°C for two hours. Next, the resulting reaction mixture was washed seven times with 100 ml of heptane at 30°C to obtain a solid catalyst component. The solid catalyst component was analyzed to find that the titanium content was 2.4 wt% and the silane content was 3.0 wt%.

(Preparation of polymerization catalyst and polymerization)

A 2.0l autoclave equipped with a stirrer, of which the internal atmosphere had been entirely replaced with nitrogen gas, was charged with 1.32 mmol of triethylaluminum and the above solid catalyst component in an amount, in terms of the titanium atom contained therein, of 0.0026 mmol, thereby forming a polymerization catalyst. Then, with the addition of 4l of hydrogen gas and 1.4l of liquified propylene, preliminary polymerization was carried out for five minutes at 20°C, following which the preliminary polymerization product was heated and main polymerization was carried out for one hour at 70°C. The catalytic activity, the heptane insoluble components (HI, wt%), the melt index (MI, g-PP/10 min), and the xylene-soluble components at 23°C (XS, wt%) of the resulting polymer were measured. The results are also shown in Table 3.

The catalytic activity per gram of the solid catalyst component for the amount of polymer (F) (g) per one hour of polymerization was calculated using the following formula:

Catalytic activity = produced polymer (F) (g)/solid catalyst component (g)/hour

The polymer (G) insoluble in n-heptane after continuously extracting this polymer for six hours in boiling n-heptane was dried and the weight was measured to determine the proportion of components insoluble in boiling n-heptane (HI, wt%) in this polymer according to the following formula:

$$\text{HI (wt\%)} = (G)(g)/(F)(g) \times 100$$

The xylene-soluble components (XS, wt%) of the polymer was determined as follows.

Process for measuring xylene soluble components: 4.0 g of the polymer was added to 200 ml of p-xylene and dissolved while maintaining the mixture at the boiling point of toluene (138°C) over two hours. The mixture was cooled to 23°C and the soluble components were separated from the insoluble components by filtration. After evaporating the solvent from the soluble components, the residue was dried with heating to obtain a polymer as the xylene-soluble components, of which the amount (XS, wt%) was indicated by the relative value for the amount (F) of the obtained polymer.

The melt index (MI) which indicates the melt flow rate of the polymer was determined according to the process conforming to ASTM D1238 or JIS K7210.

Example 2

A polymerization catalyst was prepared and polymerization was carried out in the same manner as in Example 1, except that triallylmethylsilane was used instead of diallyldimethylsilane. The results are shown in Table 3.

Example 3

A polymerization catalyst was prepared and polymerization was carried out in the same manner as in Example 1, except that diallyldichlorosilane was used instead of diallyldimethylsilane. The results are shown in Table 3.

Example 4

A polymerization catalyst was prepared and polymerization was carried out in the same manner as in Example 1, except that allyldimethylvinylsilane was used instead of diallyldimethylsilane. The results are shown in Table 3.

Example 5

A polymerization catalyst was prepared and polymerization was carried out in the same manner as in Example 1, except that allyltriethylsilane was used instead of diallyldimethylsilane. The results are shown in Table 3.

Example 6

A polymerization catalyst was prepared and polymerization was carried out in the same manner as in Example 1, except that cyclohexylmethyldimethoxysilane instead of t-butylethyldimethoxysilane. The results are shown in Table 3.

Example 7

A polymerization catalyst was prepared and polymerization was carried out in the same manner as in Example 1, except that dicyclopentyldimethoxysilane instead of t-butylethyldimethoxysilane. The results are shown in Table 3.

Example 8

(Preparation of solid component)

A 1,000 ml round bottom flask equipped with a stirrer, of which the internal atmosphere had been sufficiently replaced with nitrogen gas, was charged with 32 g of magnesium flake used as a Grignard agent. A mixture of 120 g of butyl chloride and 500 ml of dibutyl ether was added dropwise to the magnesium over four hours at 50°C, then the mixture was reacted for one hour at 60°C. After the reaction, the reaction solution was cooled to room temperature and the solid components were removed by filtration to obtain a solution of the magnesium compound. 150 ml of the magnesium compound solution was added dropwise over four hours at 5°C to a homogeneous solution which was prepared from 240 ml of hexane, 5.4 g of tetrabutoxytitanium, and 61.4 g of tetraethoxysilane in a 500 ml round bottom flask equipped with a stirrer, of which the internal atmosphere had been sufficiently replaced with nitrogen gas. After the reaction, the mixture was stirred for one hour at room temperature. The resulting reaction solution was filtered at room temperature to remove the liquid portion. The resulting solid was washed eight times with 240 ml of hexane, and dried under reduced pressure to obtain a solid product. 8.6 g of the solid product was added to a 100 ml round bottom flask equipped with a stirrer, of which the internal atmosphere had been sufficiently replaced with nitrogen gas, followed by the addition of 48 ml of toluene and 5.8 ml of diisobutyl phthalate. The mixture was reacted for one hour at 95°C. Next, the liquid portion was removed by filtration and the solid residue was washed eight times with 85 ml of toluene. After washing, 21 ml of toluene, 0.48 ml of diisobutyl phthalate, and 12.8 ml of titanium tetrachloride were added to the flask. Then, the mixture was reacted at 95°C for eight hours. After the reaction, the solid was separated from the liquid at 95°C, washed twice with 48 ml of toluene, and again treated with diisobutyl phthalate and titanium tetrachloride under the same conditions as above. The resulting solid was washed eight times with 48 ml of hexane, filtered, and dried to obtain a solid catalyst component in the form of a powder. The content of titanium in the solid catalyst component was analyzed and found to be 2.1 wt%.

(Preparation of solid catalyst component)

A solid catalyst component was prepared in the same manner as in Example 1 except for using the solid component obtained above.

(Preparation of polymerization catalyst and polymerization)

A polymerization catalyst was prepared and polymerization was carried out in the same manner as in Example 1, except for using the solid catalyst component prepared above. The results are shown in Table 3.

Example 9

(Preparation of solid component)

A 500 ml round bottom flask equipped with a stirrer, of which the internal atmosphere had been sufficiently replaced with nitrogen gas, was charged with 4.76 g of anhydrous magnesium chloride, 25 ml of decane, and 23.4 ml of 2-ethylhexyl alcohol. The mixture was reacted for two hours at 130°C to obtain a homogeneous solution. Then, 1.11 g of phthalic anhydride was added to the homogeneous solution and the mixture was reacted at 130°C for one hour. The resulting reaction solution was added dropwise over one hour to 200 ml of titanium tetrachloride maintained at -20°C in another 500 ml round bottom flask equipped with a stirrer, of which the internal atmosphere had been sufficiently replaced with nitrogen gas. The mixed solution was heated to 110°C over four hours and 2.68 ml of diisobutyl phthalate was added. The mixture was reacted for two hours. After the reaction, the liquid portion was removed by filtration. The remaining solid was washed with decane and hexane at 110°C until no free titanium compounds were detected, filtered, and dried to obtain a solid catalyst component in the form of a powder. The content of titanium in the solid catalyst component was measured and found to be 3.1 wt%.

(Preparation of solid catalyst component)

A solid catalyst component was prepared in the same manner as in Example 1 except for using the solid component obtained above.

(Preparation of polymerization catalyst and polymerization)

A polymerization catalyst was prepared and polymerization was carried out in the same manner as in Example 1, except for using the solid catalyst component prepared above. The results are shown in Table 3.

Comparative Example 1

A polymerization catalyst was prepared and polymerization was carried out in the same manner as in Example 1, except that allyltrimethylsilane was used instead of diallyldimethylsilane. The results are shown in Table 3.

Comparative Example 2

A polymerization catalyst was prepared and polymerization was carried out in the same manner as in Example 1, except that vinyltrimethylsilane was used instead of diallyldimethylsilane. The results are shown in Table 3.

Comparative Example 3

A polymerization catalyst was formed and polymerization was carried out in the same manner as in Example 1, except that divinyldimethylsilane was used instead of diallyldimethylsilane. The results are shown in Table 3.

TABLE 3

|  | Polymerization activity g-PP/g-cat | HI wt% | MI g/10min | XS wt% |
|---|---|---|---|---|
| Example 1 | 63,600 | 98.0 | 19 | 1.7 |
| Example 2 | 65,100 | 97.6 | 36 | 2.3 |
| Example 3 | 52,000 | 97.7 | 26 | 2.0 |
| Example 4 | 64,400 | 97.7 | 33 | 1.9 |
| Example 5 | 59,600 | 97.6 | 25 | 2.0 |
| Example 6 | 62,500 | 97.8 | 35 | 2.1 |
| Example 7 | 64,800 | 98.1 | 27 | 1.7 |
| Example 8 | 50,900 | 97.3 | 36 | 2.6 |
| Example 9 | 52,300 | 97.2 | 31 | 3.0 |
| Comparative Example 1 | 32,000 | 97.5 | 15 | 2.2 |
| Comparative Example 2 | 53,300 | 97.5 | 11 | 2.3 |
| Comparative Example 3 | 56,800 | 97.5 | 12 | 2.2 |

Example 10

(Preparation of solid component)

A 2,000 ml round bottom flask equipped with a stirrer, of which the internal atmosphere had been sufficiently replaced with nitrogen gas, was charged with 150 g of diethoxymagnesium and 750 ml of toluene to prepare a suspension. The suspension was added to a solution of 450 ml of toluene and 300 ml of titanium tetrachloride in another 2,000 ml round bottom flask equipped with a stirrer, of which the internal atmosphere had been sufficiently replaced with nitrogen gas. The suspension was reacted at 5°C for one hour. After the addition of 22.5 ml of di-n-butyl phthalate, the mixture was heated to 100°C and reacted for two hours with stirring (first reaction). After the reaction, the resulting reaction mixture was washed four times with 1,300 ml of toluene at 80°C. After the addition of 1,200 ml of toluene and 300 ml of titanium tetrachloride, the reaction mixture was heated to 110°C and reacted for two hours with stirring (second reaction). The intermediate washing and the second reaction was repeated once more. The resulting reaction mixture was washed seven times with 1,300 ml of heptane at 40°C, filtered, and dried to obtain a solid component in the form of a powder. The content of titanium in the solid component was measured and found to be 2.9 wt%.

(Preparation of solid catalyst component)

12 g of the solid component obtained above was suspended in 25 ml of titanium tetrachloride and 100 ml of heptane, and the mixture was reacted at 100°C for two hours. After the reaction, the supernatant liquid was removed by decantation and 22 mmol of diallyldimethylsilane and 30 ml if heptane were added. The mixture was reacted at 80°C for two hours. After the reaction, the resulting reaction solution was cooled to 50°C. 22 mmol of t-butylethyldimethoxysilane and 37 mmol of triethylaluminum were added and the mixture was stirred at 50°C for two hours. Next, the resulting reaction mixture was washed seven times with 100 ml of heptane at 30°C to obtain a solid catalyst component. The solid catalyst component was analyzed to find that the titanium content was 3.4 wt% and the silane content was 3.0 wt%.

(Preparation of polymerization catalyst and polymerization)

A 2.01 autoclave equipped with a stirrer, of which the internal atmosphere had been entirely replaced with nitrogen gas, was charged with 1.32 mmol of triethylaluminum and the above solid catalyst component in an amount, in terms of the titanium atom contained therein, of 0.0026 mmol, thereby forming a polymerization catalyst. Then, with the addition of 41 of hydrogen gas and 1.41 of liquified propylene, preliminary polymerization was carried out for five minutes at 20°C, following which the preliminary polymerization product was heated and main polymerization was carried out for one hour at 70°C. The catalytic activity, the heptane insoluble components (HI, wt%), the melt index (MI, g-PP/10 min), and the xylene-soluble components at 23°C (XS, wt%) of the resulting polymer were measured. The results are also shown in Table 4.

Example 11

A solid catalyst component was prepared, a polymerization catalyst was formed, and polymerization was carried out in the same manner as in Example 10, except that triallylmethylsilane was used instead of diallyldimethylsilane. The results are shown in Table 4.

Example 12

A solid catalyst component was prepared, a polymerization catalyst was formed, and polymerization was carried out in the same manner as in Example 10, except that diallyldichlorosilane was used instead of diallyldimethylsilane. The results are shown in Table 4.

Example 13

A solid catalyst component was prepared, a polymerization catalyst was formed, and polymerization was carried out in the same manner as in Example 10, except that allyldimethylvinylsilane was used instead of diallyldimethylsilane. The results are shown in Table 4.

Example 14

A solid catalyst component was prepared, a polymerization catalyst was formed, and polymerization was carried out in the same manner as in Example 10, except that allyltriethylsilane was used instead of diallyldimethylsilane. The results are shown in Table 4.

Example 15

A solid catalyst component was prepared, a polymerization catalyst was formed, and polymerization was carried out in the same manner as in Example 10, except that cyclohexylmethyldimethoxysilane was used instead of t-butylethyldimethoxysilane. The results are shown in Table 4.

Example 16

A solid catalyst component was prepared, a polymerization catalyst was formed, and polymerization was carried out in the same manner as in Example 10, except that dicyclopentyldimethoxysilane was used instead of t-butylethyldimethoxysilane. The results are shown in Table 4.

Example 17

(Preparation of solid component)

A 1,000 ml round bottom flask equipped with a stirrer, of which the internal atmosphere had been sufficiently replaced with nitrogen gas, was charged with 32 g of magnesium flake used as a Grignard agent. A mixture of 120 g of butyl chloride and 500 ml of dibutyl ether was added dropwise to the magnesium over four hours at 50°C, then the mixture was reacted for one hour at 60°C. After the reaction, the reaction solution was cooled to room temperature and the solid components were removed by filtration to obtain a solution of the magnesium compound. 150 ml of the magnesium compound solution was added dropwise over four hours at 5°C to a homogeneous solution which was prepared from 240 ml of hexane, 5.4 g of tetrabutoxytitanium, and 61.4 g of tetraethoxysilane in a 500 ml round bottom flask equipped with a stirrer, of which the internal atmosphere had been sufficiently replaced with nitrogen gas. After the reaction, the mixture was stirred for one hour at room temperature. The resulting reaction solution was filtered at room temperature to remove the liquid portion. The resulting solid was washed eight times with 240 ml of hexane, and dried under reduced pressure to obtain a solid product. 8.6 g of the solid product was added to a 100 ml round bottom flask equipped with a stirrer, of which the internal atmosphere had been sufficiently replaced with nitrogen gas, followed by the addition of 48 ml of toluene and 5.8 ml of diisobutyl phthalate. The mixture was reacted for one hour at 95°C. Next, the liquid portion was removed by filtration and the solid residue was washed eight times with 85 ml of toluene. After washing, 21 ml of toluene, 0.48 ml of diisobutyl phthalate, and 12.8 ml of titanium tetrachloride were added to the flask. Then, the mixture was reacted at 95°C for eight hours. After the reaction, the solid was separated from the liquid at 95°C, washed twice with 48 ml of toluene, and again treated with diisobutyl phthalate and titanium tetrachloride under the same conditions as above. The resulting solid was washed eight times with 48 ml of hexane, filtered, and dried to obtain a solid catalyst component in the form of a powder. The content of titanium in the solid catalyst component was analyzed and found to be 2.1 wt%.

(Preparation of solid catalyst component)

A solid catalyst component was prepared in the same manner as in Example 10 except for using the solid component obtained above.

(Preparation of polymerization catalyst and polymerization)

A polymerization catalyst was prepared and polymerization was carried out in the same manner as in Example 10, except for using the solid catalyst component prepared above. The results are shown in Table 4.

Example 18

(Preparation of solid component)

A 500 ml round bottom flask equipped with a stirrer, of which the internal atmosphere had been sufficiently replaced with nitrogen gas, was charged with 4.76 g of anhydrous magnesium chloride, 25 ml of decane, and 23.4 ml of 2-ethylhexyl alcohol. The mixture was reacted for two hours at 130°C to obtain a homogeneous solution. Then, 1.11 g of phthalic anhydride was added to the homogeneous solution and the mixture was reacted at 130°C for one hour. The resulting reaction solution was added dropwise over one hour to 200 ml of titanium tetrachloride maintained at -20°C in another 500 ml round bottom flask equipped with a stirrer, of which the internal atmosphere had been sufficiently replaced with nitrogen gas. The mixed solution was heated to 110°C over four hours and 2.68 ml of diisobutyl phthalate was added. The mixture was reacted for two hours. After the reaction, the liquid portion was removed by filtration. The remaining solid was washed with decane and hexane at 110°C until no free titanium compounds were detected, filtered, and dried to obtain a solid catalyst component in the form of a powder. The content of titanium in the solid catalyst component was measured and found to be 3.1 wt%.

(Preparation of solid catalyst component)

A solid catalyst component was prepared in the same manner as in Example 10 except for using the solid component obtained above.

(Preparation of polymerization catalyst and polymerization)

A polymerization catalyst was prepared and polymerization was carried out in the same manner as in Example 10, except for using the solid catalyst component prepared above. The results are shown in Table 4.

Comparative Example 4

A solid catalyst component was prepared, a polymerization catalyst was formed, and polymerization was carried out in the same manner as in Example 10, except that allyltrimethylsilane was used instead of diallyldimethylsilane. The results are shown in Table 4.

Comparative Example 5

A solid catalyst component was prepared, a polymerization catalyst was formed, and polymerization was carried out in the same manner as in Example 10, except that vinyltrimethylsilane was used instead of diallyldimethylsilane. The results are shown in Table 4.

Comparative Example 6

A solid catalyst component was prepared, a polymerization catalyst was formed, and polymerization was carried out in the same manner as in Example 10, except that divinyldimethyl was used instead of diallyldimethylsilane. The results are shown in Table 4.

TABLE4

| | Polymerization activity g-PP/g-cat | HI wt% | MI g/10min | XS wt% |
|---|---|---|---|---|
| Example 10 | 77,900 | 97.9 | 20 | 4.8 |
| Example 11 | 80,300 | 97.6 | 34 | 2.5 |
| Example 12 | 64,000 | 97.8 | 22 | 1.9 |
| Example 13 | 78,100 | 97.5 | 31 | 2.0 |
| Example 14 | 69,500 | 97.4 | 29 | 2.2 |
| Example 15 | 65,000 | 97.6 | 17 | 2.3 |
| Example 16 | 70,300 | 98.0 | 12 | 1.9 |
| Example 17 | 59,800 | 97.4 | 31 | 5.4 |
| Example 18 | 62,500 | 97.3 | 29 | 2.9 |
| Comparative Example 4 | 39,200 | 97.5 | 15 | 2.1 |
| Comparative Example 5 | 64,700 | 97.4 | 12 | 2.3 |
| Comparative Example 6 | 70,100 | 97.6 | 12 | 2.0 |

Example 19

(Preparation of solid component)

A 500 ml round bottom flask equipped with a stirrer, in which the internal atmosphere had been sufficiently replaced with nitrogen gas, was charged with 10 g of diethoxy magnesium, 2.5 g of di-n-butyl phthalate, and 80 ml of toluene. The resulting suspension was maintained at 10°C. 20 ml of titanium tetrachloride was added to the suspension while cooling the flask to maintain the temperature of the suspension at 10°C. The mixture was stirred at 10°C for one hour. Then, the mixture was heated to 90°C and reacted for one hour while stirring at 90°C. After the reaction, the resulting reaction mixture was washed four times with 100 ml of toluene at 80°C. After the addition of 20 ml of titanium tetrachloride and 80 ml of toluene, the reaction mixture was heated to 100°C and reacted for one hour while stirring. After the reaction, the resulting reaction mixture was washed seven times with 100 ml of n-heptane at 40°C. Solid was separated from liquid. The content of titanium in the solid component was measured and found to be 2.8 wt%.

(Preparation of solid catalyst component)

6 g of the solid component obtained above was suspended in 21 ml of heptane in a 300 ml round bottom flask equipped with a stirrer, in which the internal atmosphere had been sufficiently replaced with nitrogen gas. 0.5 g of diallyldimethylsilane was added and the mixture was maintained at 60°C for one hour. After one hour, 23 ml of heptane, 3.9 g of bisperhydroisoquinolinnodimethoxysilane, and 2 g of triethylaluminum were added, and the mixture was maintained at 60°C for one hour. Then, the resulting mixture was washed eight times with 50 ml of heptane. A solid catalyst component was separated from liquid. The content of titanium in the solid catalyst component was measured and found to be 2.0 wt%.

(Preparation of polymerization catalyst and polymerization)

A 2.01 autoclave equipped with a stirrer, of which the internal atmosphere had been entirely replaced with nitrogen gas, was charged with 1.32 mmol of triethylaluminum and the above solid catalyst component in an amount, in terms of the titanium atom contained therein, of 0.0026 mmol, thereby forming a polymerization catalyst. Then, with the addition of 1.51 of hydrogen gas and 1.41 of liquefied propylene, preliminary polymerization was carried out for five minutes at 20°C, following which the preliminary polymerization product was heated and main polymerization was carried out for one hour at 70°C. The polymerization activity per gram of the solid catalyst component, the heptane insoluble components (HI), and the melt index (MI), and polydispersity index (PI) of the solid catalytic component are shown in Table 5.

Polydispersity index (PI) was measured using a dynamic stress rheometer manufactured by Rheometric Scientific, Inc. using a disk with a thickness of 1.0 mm.

Example 20

A solid catalyst component was prepared in the same manner as in Example 19 using the solid component prepared in the Example 19, except that the amount of bisperhydroisoquinolinodimethoxysilane was reduced to 1.9 g from 3.9 g, and a polymerization catalyst was formed from the solid catalyst component. The content of titanium in the resulting solid catalyst component was 2.2 wt%. The polymerization results are shown in Table 5.

Example 21

A solid catalyst component was prepared in the same manner as in Example 19 using the solid component prepared in the Example 19, except that 2.0 g of ethyl(tert-butylamino)dimethoxysilane was used instead of 3.9 g of bisperhydroisoquinolinodimethoxysilane, and a polymerization catalyst was formed from the solid catalyst component. The content of titanium in the resulting solid catalyst component was 2.7 wt%. The polymerization results are shown in Table 5.

Example 22

A solid catalyst component was prepared in the same manner as in Example 19 using the solid component prepared in the Example 19, except that 2.3 g of ethyl(tert-butylamino)diethoxysilane was used instead of 3.9 g of bisperhydroisoquinolinodimethoxysilane, and a polymerization catalyst was formed from the solid catalyst component. The content of titanium in the resulting solid catalyst component was 2.6 wt%. The polymerization results are shown in Table 5.

Example 23

A solid catalyst component was prepared in the same manner as in Example 19 using the solid component prepared in the Example 19, except that 3.9 g of bisperhydroisoquinolinodimethoxysilane was used instead of 3.9 g of bisperhydroisoquinolinodimethoxysilane, and a polymerization catalyst was formed from the solid catalyst component. The content of titanium in the resulting solid catalyst component was 2.0 wt%. The polymerization results are shown in Table 5.

Example 24

A solid catalyst component was prepared in the same manner as in Example 19 using the solid component prepared in the Example 19, except that 0.4 g of allyldimethylvinylsilane was used instead of 0.5 g of diallyldimethylsilane, and a polymerization catalyst was formed from the solid catalyst component. The content of titanium in the resulting solid catalyst component was 2.1 wt%. The polymerization results are shown in Table 5.

Example 25

A solid catalyst component was prepared in the same manner as in Example 19 using the solid component prepared in the Example 19, except that 0.6 g of triallylmethylsilane was used instead of 0.5 g of diallyldimethylsilane, and a polymerization catalyst was formed from the solid catalyst component. The content of titanium in the resulting solid catalyst component was 2.0 wt%. The polymerization results are shown in Table 5.

Example 26

A solid catalyst component was prepared in the same manner as in Example 19 using the solid component prepared in the Example 19, except that 2.3 g of ethyl(tert-butylamino)diethoxysilane was used instead of 3.9 g of bisperhydroisoquinolinodimethoxysilane, 0.6 g of diallyldichlorosilane was used instead of 0.5 g of diallyldimethylsilane, and a polymerization catalyst was formed from the solid catalyst component. The content of titanium in the resulting solid catalyst component was 2.7 wt%. The polymerization results are shown in Table 5.

Example 27

A solid catalyst component was prepared in the same manner as in Example 19 using the solid component prepared in the Example 19, except that 2.3 g of ethyl(tert-butylamino)diethoxysilane was used instead of 3.9 g of bisperhydroisoquinolinodimethoxysilane, 0.5 g of allyltriethylsilane was used instead of 0.5 g of diallyldimethylsilane, and a polymerization catalyst was formed from the solid catalyst component. The content of titanium in the resulting solid catalyst component was 2.6 wt%. The polymerization results are shown in Table 5.

Example 28

A solid component and a solid catalyst component were prepared in the same manner as in Example 19, except that 2.5 g of diisobutyl phthalate was used instead of 2.5 g of di-n-butyl phthalate, and a polymerization catalyst was formed from the solid catalyst component. The content of titanium in the resulting solid catalyst component was 2.0 wt%. The polymerization results are shown in Table 5.

Example 29

The polymerization was carried out in the same manner as in Example 19, except that 0.013 mmol of cyclohexylmethyldimethoxysilane was further added when forming the polymerization catalyst. The polymerization results are shown in Table 5.

Example 30

A solid catalyst component was prepared in the same manner as in Example 19 using the solid component prepared in the Example 24, except that 2.3 g of ethyl(tert-butylamino)diethoxysilane was used instead of 3.9 g of bisperhydroisoquinolinodimethoxysilane, and a polymerization catalyst was formed from the solid catalyst component. The content of titanium in the resulting solid catalyst component was 2.7 wt%. The polymerization results are shown in Table 5.

Example 31

A solid catalyst component was prepared in the same manner as in Example 20 using the solid component prepared in the Example 25, except that 2.3 g of ethyl(tert-butylamino)diethoxysilane was used instead of 3.9 g of bisperhydroisoquinolinodimethoxysilane, and a polymerization catalyst was formed from the solid catalyst component. The content of titanium in the resulting solid catalyst component was 2.7 wt%. The polymerization results are shown in Table 5.

Example 32

A solid catalyst component was prepared in the same manner as in Example 19 using the solid component prepared in the Example 19, except that 0.4 g of divinyldimethylsilane was used instead of 0.5 g of diallyldimethylsilane, and a polymerization catalyst was formed from the solid catalyst component. The content of titanium in the resulting solid catalyst component was 2.2 wt%. The polymerization results are shown in Table 5.

Example 33

A solid catalyst component was prepared in the same manner as in Example 19 using the solid component prepared in the Example 19, except that 0.4 g of vinyltrimethylsilane was used instead of 0.5 g of diallyldimethylsilane, and a polymerization catalyst was formed from the solid catalyst component. The content of titanium in the resulting solid catalyst component was 2.1 wt%. The polymerization results are shown in Table 5.

Example 34

A solid catalyst component was prepared in the same manner as in Example 19 using the solid component prepared in the Example 23, except that 0.4 g of vinyltrimethylsilane was used instead of 0.5 g of diallyldimethylsilane, and a polymerization catalyst was formed from the solid catalyst component. The content of titanium in the resulting solid catalyst component was 2.3 wt%. The polymerization results are shown in Table 5.

Comparative Example 7

(Preparation of polymerization catalyst and polymerization)

A 2.01 autoclave equipped with a stirrer, of which the internal atmosphere had been entirely replaced with nitrogen gas, was charged with 1.32 mmol of triethylaluminum, 0.13 mmol of bisperhydroisoquinolinodimethoxysilanes, and the solid component prepared in Example 19 in an amount, in terms of the titanium atom contained therein, of 0.0026 mmol, thereby forming a polymerization catalyst. Then, with the addition of 1.51 of hydrogen gas and 1.41 of liquified propylene, preliminary polymerization was carried out for five minutes at 20°C, following which the preliminary polymerization product was heated and main polymerization was carried out for one hour at 70°C. The polymerization results are shown in Table 5.

Comparative Example 8

A solid catalyst component was prepared in the same manner as in Example 28 using the solid component prepared in the Example 19, except that 2.0 g of cyclohexylmethyldimethoxysilane was used instead of 3.9 g of bisperhydroisoquinolinodimethoxysilane, and a polymerization catalyst was formed from the solid catalyst component. The content of titanium in the resulting solid catalyst component was 1.9 wt%. The polymerization results are shown in Table 5.

Comparative Example 9

Using the solid component prepared in Example 19, a solid catalyst component was prepared, a polymerization catalyst was formed, and polymerization was carried out in the same manner as in Example 19, except that use of the solid component prepared in the Example 19 was omitted when preparing the solid catalyst component. The content of titanium in the resulting solid catalyst component was 1.9 wt%. The polymerization results are shown in Table 5.

TABLE 5

|  | Polymerization activity g-PP/g-cat | HI wt% | MI g/10 min | PI |
|---|---|---|---|---|
| Example 19 | 32,400 | 97.0 | 3.6 | 8.7 |
| Example 20 | 34,000 | 96.9 | 3.2 | 8.8 |
| Example 21 | 37,700 | 98.9 | 4.4 | 6.0 |
| Example 22 | 27,800 | 98.3 | 6.4 | 6.1 |
| Example 23 | 31,800 | 97.1 | 6.5 | 8.3 |
| Example 24 | 32,800 | 96.6 | 5.3 | 8.7 |
| Example 25 | 33,500 | 96.7 | 5.5 | 8.6 |
| Example 26 | 28,700 | 97.8 | 8.2 | 6.0 |
| Example 27 | 29,400 | 98.4 | 6.3 | 6.3 |
| Example 28 | 32,200 | 96.8 | 4.2 | 8.8 |
| Example 29 | 35,600 | 98.3 | 4.3 | 8.1 |
| Example 30 | 32,900 | 97.9 | 8.1 | 6.2 |
| Example 31 | 34,000 | 97.9 | 8.4 | 6.4 |
| Example 32 | 29,000 | 96.3 | 1.9 | 7.9 |
| Example 33 | 30,100 | 96.9 | 6.1 | 8.0 |
| Example 34 | 31,400 | 96.8 | 4.7 | 8.4 |
| Comparative Example 7 | 29,400 | 98.2 | 1.3 | 7.0 |
| Comparative Example 8 | 32,000 | 96.5 | 4.0 | 4.0 |
| Comparative Example 9 | 18,400 | 92.0 | 14 | 5.8 |

It can be seen from the above results that olefin polymers with high stereoregularity can be obtained in a high yield by using the catalyst of the present invention. In addition, the hydrogen response was excellent and the polymers had a broad molecular weight distribution.

Example 35

(Preparation of propylene-ethylene random copolymer)

A 2.01 autoclave equipped with a stirrer, of which the internal atmosphere had been entirely replaced with nitrogen gas, was charged with 700 ml of n-heptane. A polymerization catalyst was formed by adding triethylaluminum (TEAL) and the solid catalyst component prepared in Example 1 in an amount, in terms of the titanium atom contained therein, of 0.0035 mmol, while maintaining the atmosphere of an ethylene-propylene mixed gas. The mol ratio of Ti to TEAL (Ti:TEAL) in the solid catalyst component was 1:600. First, a preliminary polymerization was carried using only propylene at 20°C under 0.1 MPaG for 30 minutes. Then, the system was heated to 70°C and copolymerization was carried out by feeding propylene, ethylene, and hydrogen gas at a rate respectively of 0.22 mol/min, 0.013 mol/min, and 0.0067 mol/min while maintaining the temperature at 70°C under 0.4 MPaG for 120 minutes. The suspension of the resulting copolymer was filtered to separate into an insoluble component and a soluble component. The amount of insoluble component, its ethylene content, MI, and melting point were measured, and the amount of soluble component was measured. The results are shown in Table 6.

Comparative Example 10

A propylene-ethylene random copolymer was prepared in the same manner as in Example 35, except for using the solid catalyst component prepared in Comparative Example 1. The results are shown in Table 6.

TABLE 6

|  | Example 35 | Comparative Example 10 |
| --- | --- | --- |
| Polymerization activity (g/g-cat.) | 14,000 | 8,300 |
| Ethylene content (wt%) | 2.1 | 1.9 |
| Heptane insoluble components (wt%) | 0.3 | 3.8 |
| MI (g/10 min) | 3.2 | 2.8 |
| Melting point (°C) | 148 | 152 |

Example 36

(Preparation of propylene-ethylene block copolymer)

A 2.01 autoclave equipped with a stirrer, of which the internal atmosphere had been entirely replaced with nitrogen gas, was charged with triethylaluminum (TEAL), the solid catalyst component prepared in Example 1 in an amount, in terms of the titanium atom contained therein, of 0.0026 mmol, thereby forming a polymerization catalyst. The mol ratio of Ti to TEAL (Ti:TEAL) in the solid catalyst component was 1:700. Then, with the addition of 200 mmol of hydrogen gas and 1.21 of liquified propylene, preliminary polymerization was carried out for five minutes at 20°C, followed by bulk polymerization of propylene at 70°C for one hour. Next, a mixed gas of ethylene, propylene, and hydrogen at a molar ratio of 0.7:1:0.03 was supplied under a pressure of 1.2 MPa at 70°C for two hours to effect a vapor phase reaction, thereby obtaining a propylene-ethylene block copolymer with a rubber portion content of about 30 wt%. The polymerization activity, ethylene content of the resulting propylene-ethylene block copolymer, EPR content, PP section MI, PP section xylene insoluble components, and MI are shown in Table 7.

Comparative Example 11

A propylene-ethylene random copolymer was prepared in the same manner as in Example 36, except for using the solid catalyst component prepared in Comparative Example 1. The results are shown in Table 7.

TABLE 7

|  | Example 36 | Comparative Example 11 |
|---|---|---|
| Homopolymerization activity (g/g-cat.) | 54,200 | 32,000 |
| Ethylene content in EPR (wt%) | 48 | 44 |
| EPR content (wt%) | 33 | 30 |
| Copolymerization activity | 74,800 | 49,200 |
| Homopolymer MI (g/10 min) | 160 | 150 |
| Copolymer MI (g/10 min) | 18 | 20 |

Example 37

(Preparation of propylene-ethylene random copolymer)

A 2.01 autoclave equipped with a stirrer, of which the internal atmosphere had been entirely replaced with nitrogen gas, was charged with 700 ml of n-heptane. A polymerization catalyst was formed by adding triethylaluminum (TEAL) and the solid catalyst component prepared in Example 11 in an amount, in terms of the titanium atom contained therein, of 0.0035 mmol, while maintaining the atmosphere of an ethylene-propylene mixed gas. The mol ratio of Ti to TEAL (Ti:TEAL) in the solid catalyst component was 1:600. First, a preliminary polymerization was carried out using only propylene at 20°C under 0.1 MPaG for 30 minutes. Then, the system was heated to 70°C and copolymerization was carried out by feeding propylene, ethylene, and hydrogen gas at a rate respectively of 0.22 mol/min, 0.013 mol/min, and 0.0067 mol/min while maintaining the temperature at 70°C under 0.4 MPaG for 120 minutes. The suspension of the resulting copolymer was filtered to separate into an insoluble component and a soluble component. The amount of insoluble component, its ethylene content, MI, and melting point were measured, and the amount of soluble component was measured. The results are shown in Table 8.

Comparative Example 12

A propylene-ethylene random copolymer was prepared in the same manner as in Example 37, except for using the solid catalyst component prepared in Comparative Example 4. The results are shown in Table 8.

TABLE 8

|  | Example 37 | Comparative Example 12 |
|---|---|---|
| Polymerization activity (g/g-cat.) | 17,000 | 10,100 |
| Ethylene content (wt%) | 2.0 | 1.8 |
| Heptane soluble components (wt%) | 0.4 | 3.5 |
| MI (g/10 min) | 3.5 | 2.7 |
| Melting point (°C) | 148 | 150 |

Example 38

(Preparation of propylene-ethylene block copolymer)

A 2.01 autoclave equipped with a stirrer, of which the internal atmosphere had been entirely replaced with nitrogen gas, was charged with triethylaluminum (TEAL), the solid catalyst component prepared in Example 10 in an amount, in terms of the titanium atom contained therein, of 0.0026 mmol, thereby forming a polymerization catalyst. The mol ratio of Ti to TEAL (Ti:TEAL) in the solid catalyst component was 1:700. Then, with the addition of 200 mmol of hydrogen gas and 1.21 of liquified propylene, preliminary polymerization was carried out for five minutes at 20°C, followed by bulk polymerization of propylene at 70°C for one hour. Next, a mixed gas of ethylene, propylene, and hydrogen at a molar ratio of 0.7:1:0.03 was supplied under a pressure of 1.2 MPa at 70°C for two hours to effect a vapor phase reaction, thereby obtaining a propylene-ethylene block copolymer with a rubber portion content of about 30 wt%. The polymerization activity, ethylene content of the resulting propylene-ethylene block copolymer, EPR content, PP section MI, PP section xylene insoluble components, and MI are shown in Table 9.

Comparative Example 13

A propylene-ethylene random copolymer was prepared in the same manner as in Example 38, except for using the solid catalyst component prepared in Comparative Example 4. The results are shown in Table 9.

TABLE 9

| | Example 38 | Comparative Example 13 |
|---|---|---|
| Homopolymerization activity (g/g-cat.) | 66,400 | 38,500 |
| Ethylene content in EPR (wt%) | 48 | 44 |
| EPR content (wt%) | 30 | 29 |
| Copolymerization activity | 89,600 | 56,800 |
| Homopolymer MI (g/10 min) | 150 | 145 |
| Copolymer MI (g/10 min) | 20 | 22 |

As mentioned above, if the catalyst of the present invention is used for random copolymerization of propylene and ethylene, a random copolymer with a high ethylene content and high random properties can be obtained under the same polymerization conditions, while a block copolymer with a high EPR content can be obtained under the same polymerization conditions.

INDUSTRIAL APPLICABILITY

According to the present invention, high stereoregularity and a high yield of the polymer as compared with conventional catalyst can be ensured. In addition, since the catalyst has superior hydrogen response, general purpose polyolefin can be produced at a low cost. The catalyst is expected to be useful also in the manufacture of olefin polymers having sophisticated functions. Moreover, since olefin polymers with a broad molecular weight distribution can be obtained, polymers suitable for production of a biaxial-orientation polypropylene film can be provided.

**Claims**

1.   A solid catalyst component for polymerization of olefins obtained by contacting (a) a solid component containing magnesium, titanium, halogen, and an electron donor compound, (b) an organosilicon compound represented by the following formula (1), (c) an organosilicon compound represented by the following formula (2), and (d) an organoaluminum compound represented by the following formula (3):

$$(R^1R^2N)_s(R^3)_{4-s-t}Si(OR^4)_t \qquad (1)$$

wherein $R^1$ individually represents a linear or branched alkyl group having 1 to 12 carbon atoms, a cycloalkyl group, an aryl group, a vinyl group, an allyl group, or an aralkyl group, $R^2$ individually represents a hydrogen atom, a linear or branched alkyl group having 1 to 12 carbon atoms, a cycloalkyl group, an aryl group, a vinyl group, an allyl group, or an aralkyl group, $R^1$ and $R^2$ being either the same or different, or $R^1$ and $R^2$ bonding together to form a cyclic divalent group, $R^3$ individually represents a linear or branched alkyl group having 1 to 20 carbon atoms, a cycloalkyl group, an aryl group, a vinyl group, an allyl group, or an aralkyl group, $R^4$ individually represents an alkyl group having 1 to 4 carbon atoms, a cycloalkyl group, an aryl group, a vinyl group, an allyl group, or an aralkyl group, s is an integer of 0 or satisfying $1 \leq s \leq 3$, and t indicates an integer from 1 to 3, provided that $s + t \leq 4$, provided further that when t is 3, s is 0, and when s = 0, $R^3$ may be a hydrogen atom,

$$[CH_2=CH-(CH_2)_n]_qSiR^5_{4-q} \qquad (2)$$

wherein $R^5$ individually represents a hydrogen atom, an alkyl group having 1 to 20 carbon atoms, a cycloalkyl group, a phenyl group, a vinyl group, or a halogen atom, n is 0 or an integer of 1 to 5, and q is an integer of 1 to 4, provided that when q is 1, at least one of $R^5$s is an alkyl group having 2 to 20 carbon atoms, a cycloalkyl group, an aryl group, a vinyl group, or a halogen atom,

$$R^6_r AlQ_{3-r} \qquad (3)$$

wherein $R^6$ represents an alkyl group having 1 to 4 carbon atoms, Q represents a hydrogen atom or a halogen atom, and r represents a real number satisfying the formula $0 < p \leq 3$.

2.  The solid catalyst component for polymerization of olefins according to claim 1, wherein the organosilicon compound (b) is a compound of the formula (1) in which s = 0, and the organosilicon compound (c) is a compound of the formula (2) in which n is an integer of 1 to 5.

3.  The solid catalyst component for polymerization of olefins according to claim 1, wherein the organosilicon compound (b) is a compound of the formula (1) in which s is an integer satisfying $1 \leq s \leq 3$, t is an integer of 1 or 2 , and the organosilicon compound (c) is a compound of the formula (2) in which n is 0 or an integer of 1 to 5.

4.  The solid catalyst component for olefin polymerization according to claim 1, wherein the solid component (a) is prepared by contacting a magnesium compound (i), a titanium compound (ii), and an electron donor compound (iii).

5.  The solid catalyst component for olefin polymerization according to claim 1, wherein the solid component (a) is prepared by contacting a magnesium compound (i), a titanium compound (ii), an electron donor compound (iii), and an aromatic hydrocarbon compound (iv).

6.  The solid catalyst component for polymerization of olefins according to claim 4 , wherein the magnesium compound (i) is a dialkoxy magnesium or magnesium dichloride.

7.  The solid catalyst component for polymerization of olefins according to claim 4, wherein the titanium compound (ii) is a titanium tetrachloride.

8.  The solid catalyst component for olefin polymerization according to claim 4, wherein the electron donor compound (iii) is a phthalic acid diester or a derivative thereof.

9.  The solid catalyst component for polymerization of olefins according to claim 1, wherein $R^1$ in the formula (1) representing the organosilicon compound (b) is an alkyl group having a secondary carbon atom or a tertiary carbon atom.

10. The solid catalyst component for polymerization of olefins according to claim 1, wherein $R^3$ in the formula (1) representing the organosilicon compound (b) is an alkyl group having a secondary carbon atom or a tertiary carbon atom when s is 0.

11. The solid catalyst component for olefin polymerization according to claim 1, wherein the organosilicon compound (c) is a diallyldialkylsilane or a divinyldialkylsilane.

12. The solid catalyst component for olefin polymerization according to claim 1, wherein a polysiloxane (e) is caused to come in contact when the organosilicon compound (b), the organosilicon compound (c), and the organoaluminum compound (d) are caused to come in contact with the solid component (a).

13. The solid catalyst component for olefin polymerization according to claim 1, wherein a titanium compound (f) is caused to come in contact when the organosilicon compound (b), the organosilicon compound (c), and the organoaluminum compound (d) are caused to come in contact with the solid component (a).

14. A catalyst for polymerization of olefins comprising (A) the solid catalyst component according to any one of claims 1 to 13 and (B) an organoaluminum compound of the following formula (3):

$$R^6_r AlQ_{3-r} \qquad (3)$$

wherein $R^6$ represents an alkyl group having 1 to 4 carbon atoms, Q represents a hydrogen atom or a halogen atom, and r represents a real number satisfying $0 < p \leq 3$.

**15.** A process for producing an olefin polymer or copolymer comprising polymerizing olefins in the presence of the catalyst for polymerization of olefins according to claim 14.

**16.** The process for producing an olefin polymer or copolymer according to claim 15, wherein the olefin monomer is propylene or a mixture of propylene and at least one other olefin.

# Fig.1

(A)Transition metal component

   (a)Magnesium compound

      Titanium compound

      Electron donor compound

   (b)Organosilicon compound

      $R^1_p Si(OR^2)_{4-p}$

   (c)Organosilicon compound

      $[CH_2=CH-(CH_2)_n]_q SiR^3_{4-q}$

   (d)Organoaluminium compound

      $R^4_r AlQ_{3-r}$

contact

Olefin

(B)Organoaluminium compound

   $R^4_r AlQ_{3-r}$

     $0 < r \leqq 3$

## INTERNATIONAL SEARCH REPORT

| | International application No. |
|---|---|
| | PCT/JP2005/022596 |

A. CLASSIFICATION OF SUBJECT MATTER
*C08F4/658*(2006.01), *C08F10/00*(2006.01)

According to International Patent Classification (IPC) or to both national classification and IPC

B. FIELDS SEARCHED

Minimum documentation searched (classification system followed by classification symbols)
C08F4/60-70

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 63-37104 A  (Mitsui Toatsu Chemicals, Inc.), 17 February, 1988 (17.02.88), | 1,2,4,6-10, 13-16 |
| Y | Claims; page 2, lower left column, line 7 to lower right column, line 17; page 3, upper left column, line 9 to upper right column, line 3; page 3, upper right column, line 16 to lower left column, line 5; examples (Family: none) | 5,12 |

| ☒ | Further documents are listed in the continuation of Box C. | ☐ | See patent family annex. |

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 05 January, 2006 (05.01.06) | 17 January, 2006 (17.01.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2005/022596 |

C (Continuation). DOCUMENTS CONSIDERED TO BE RELEVANT

| Category* | Citation of document, with indication, where appropriate, of the relevant passages | Relevant to claim No. |
| --- | --- | --- |
| X<br>Y | JP 2-124906 A (Chisso Corp.),<br>14 May, 1990 (14.05.90),<br>Claims; page 2, lower right column, line 10 to<br>page 3, upper left column, line 2; page 3,<br>lower right column, line 19 to lower left<br>column, line 8; page 4, lower left column,<br>line 9 to lower right column, line 1; page 5,<br>upper left column, line 9 to upper right column,<br>line 1<br>(Family: none) | 1,2,4,6-11,<br>13-16<br>5,12 |
| X<br>Y | JP 3-234707 A (Mitsubishi Petrochemical Co.,<br>Ltd.),<br>18 October, 1991 (18.10.91),<br>Claims; page 5, upper left column, line 7 to<br>page 6, lower right column, line 9; page 7,<br>lower right column, line 14 to page 9, upper<br>left column, line 8; examples<br>& EP 441620 A2          & CA 2035839 A<br>& FI 9100523 A          & US 5147839 A | 1,4,6-16<br>5 |
| Y | JP 62-158704 A (Toho Titanium Co., Ltd.),<br>14 July, 1987 (14.07.87),<br>Claims<br>& EP 297163 A          & US 4816433 A | 5 |
| Y | JP 9-169808 A (Toho Titanium Co., Ltd.),<br>30 June, 1997 (30.06.97),<br>Claims<br>& WO 97/09365 A1          & EP 790257 A1<br>& BR 9606599 A          & KR 97707173 A<br>& US 5932510 A          & TW 385318 A | 12 |
| A | JP 9-48813 A (Mitsui Petrochemical Industries,<br>Ltd.),<br>18 February, 1997 (18.02.97),<br>Claims<br>(Family: none) | 1-16 |
| A | JP 2001-240634 A (Japan Polychem Corp.),<br>04 September, 2001 (04.09.01),<br>Claims<br>(Family: none) | 1-16 |
| A | JP 6-239919 A (Tonen Corp.),<br>30 August, 1994 (30.08.94),<br>Claims<br>(Family: none) | 1-16 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 57063310 A
- JP 57063311 A
- JP 63003010 A
- JP 3234707 A
- JP 1006006 A
- JP 2001240634 A

- JP 2002542347 A
- JP 58041832 A
- JP 62051633 A
- JP 3074341 A
- JP 4368391 A
- JP 8073388 A